# EUROPEAN PATENT APPLICATION

(11) **EP 4 773 557 A1**
(43) Date of publication of application: **08.07.2026**
(21) Application number: 23952758.3
(22) Date of filing: 22.09.2023
(51) Int. Cl.: H04L 27/26, H04W 72/04

(54) **COMMUNICATION METHOD AND COMMUNICATION APPARATUS**

(71) Applicant: HUAWEI TECHNOLOGIES CO., LTD., Shenzhen 518129 (CN)
(72) Inventor: GAO, Kuandong, Shenzhen, Guangdong 518129 (CN); HUANG, Huang, Shenzhen, Guangdong 518129 (CN)
(74) Representative: Goddar, Heinz J.
(86) International application number: PCT/CN2023/120881
(87) International publication number: WO 2025/060106

(57) **Abstract**

Embodiments of this application relate to the field of communication technologies, and disclose a communication method and a communication apparatus, to reduce a PAPR of a signal. A specific solution is as follows: After obtaining an SSB signal including at least one of a PSS, an SSS, a PBCH, and a DMRS, a signal transmit end may send the SSB signal in a manner of real-imaginary separation of a modulation signal. In other words, a real part of the SSB signal is separated from an imaginary part of the SSB signal. Embodiments of this application are used in a process in which the signal transmit end transmits the signal to a signal receive end.

## Description

### TECHNICAL FIELD

This application relates to the field of communication technologies, and in particular, to a communication method and a communication apparatus.

### BACKGROUND

In a communication system, to transmit a signal, power of the signal needs to be amplified first. For example, the power of the signal may be amplified through a power amplifier. However, due to technical and cost problems, a power amplifier can linearly amplify a signal only within a range. When power of the signal exceeds the range of the power amplifier, the signal is distorted.

For example, for an accumulated signal of a plurality of subcarriers, accumulation of the plurality of subcarriers results in a large peak. This requires that the power amplifier have a large linear dynamic range, thereby increasing costs of the power amplifier, and also reducing efficiency of the power amplifier. If the peak exceeds the linear dynamic range of the power amplifier, in-band distortion and out-of-band dispersion are caused. Therefore, reducing a peak to average power ratio (peak to average power ratio, PAPR) of a signal is a key technology of a communication system and is of great significance.

### SUMMARY

This application provides a communication method and a communication apparatus, to reduce a PAPR of a signal.

To achieve the foregoing objective, the following technical solutions are used in this application.

According to a first aspect, a communication method is provided. The method includes: After obtaining a synchronization signal block (synchronization signal block, SSB) signal including at least one of a primary synchronization signal (primary synchronization signal, PSS), a secondary synchronization signal (secondary synchronization signal, SSS), a physical broadcast channel (physical broadcast channel, PBCH), and a demodulation reference signal (demodulation reference signal, DMRS), a signal transmit end may send the SSB signal in a manner of real-imaginary separation of a modulation signal. In other words, a real part of the SSB signal is separated from an imaginary part of the SSB signal.

Based on the communication method provided in the first aspect, after obtaining the SSB signal, the signal transmit end may send the SSB signal in the manner of the real-imaginary separation of the modulation signal. A PAPR of a signal can be reduced due to the manner of the real-imaginary separation of the modulation signal. Therefore, based on the communication method in this application, a PAPR of the SSB signal can be reduced, and transmission efficiency can be improved.

In a possible implementation, the signal transmit end sends the SSB signal in an offset quadrature amplitude modulation (offset quadrature amplitude modulation, OQAM) waveform. Because the OQAM waveform is used to perform real-imaginary separation on the signal, the PAPR of the SSB signal can be reduced, and signal transmission efficiency can be improved.

In a possible implementation, the signal transmit end sends the SSB signal in an OQAM waveform and an orthogonal frequency division multiplexing (orthogonal frequency division multiplexing, OFDM) waveform. Because the OQAM waveform uses a real-imaginary separation manner, the PAPR of the SSB signal can be reduced to some extent, thereby improving transmission efficiency of the SSB signal.

In an example, when the SSB signal includes the DMRS and another signal, the signal transmit end sends the DMRS in the SSB signal in the OFDM waveform, and sends, in the OQAM waveform and the OFDM waveform, the signal in the SSB signal other than the DMRS.

In another example, when the SSB signal includes the SSS and another signal, the signal transmit end sends, in the OFDM waveform, the SSS in the SSB signal, and sends, in the OQAM waveform, the signal in the SSB signal other than the SSS.

In a possible implementation, the signal transmit end sends the SSB signal in an OQAM waveform and a DFT-s-OFDM waveform. Because both the OQAM waveform and the discrete Fourier transform spread orthogonal frequency division multiplexing (discrete fourier transform spread orthogonal frequency division multiplexing, DFT-s-OFDM) waveform exhibit small PAPRs, the PAPR of the SSB signal can be reduced, thereby improving transmission efficiency of the SSB signal.

In an example, when the SSB signal includes the PSS signal and another signal, the signal transmit end sends the PSS in the DFT-s-OFDM waveform, and sends the another signal in the SSB signal in the OQAM waveform.

In another possible implementation, the signal transmit end may send the SSB signal in an OQAM waveform, a DFT-s-OFDM waveform, and an OFDM waveform. Because both the OQAM waveform and the DFT-s-OFDM waveform exhibit small PAPRs, the PAPR of the SSB signal can be reduced, thereby improving transmission efficiency of the SSB signal.

In an example, when the SSB signal includes the DMRS, the PSS, and another signal, the signal transmit end may send the PSS in the DFT-s-OFDM waveform, send the DMRS in the OFDM waveform, and send, in the OQAM waveform, the signal in the SSB signal other than the PSS and the DMRS.

In still another possible implementation, the SSB signal may include a plurality of OFDM symbols. For example, two OFDM symbols, three OFDM symbols, or four OFDM symbols may be included.

In an example, when the SSB signal includes two OFDM symbols, one OFDM symbol may include one or more types of signals. For example, one OFDM symbol includes one type of signal, and the other OFDM symbol includes two types of signals.

In another example, when the SSB signal includes three OFDM symbols, one OFDM symbol may include one or more types of signals. For example, two OFDM symbols include one type of signal, and the other OFDM symbol includes two or three types of signals.

According to a second aspect, a communication apparatus is provided. The communication apparatus is used in a signal transmit end, or a chip or a system-on-a-chip in a signal transmit end, or may be a functional module that is in a signal transmit end and that is configured to implement the method according to any one of the first aspect or the possible designs of the first aspect. The communication apparatus may implement functions performed by the signal transmit end in the foregoing aspect or the possible designs, and the functions may be implemented by hardware executing corresponding software. The hardware or the software includes one or more modules corresponding to the functions. For example, the communication apparatus includes a processor and a communication interface.

The processor is configured to send an SSB signal through the communication interface in a manner of real-imaginary separation of a modulation signal.

For a specific implementation of the communication apparatus, refer to a behavior function of the signal transmit end in the communication method according to any one of the first aspect or the possible designs of the first aspect. Details are not described herein again. Therefore, the provided communication apparatus can achieve same beneficial effect as any one of the first aspect or the possible designs of the first aspect.

According to a third aspect, a communication apparatus is provided. The communication apparatus may be a signal transmit end, or a chip or a system-on-a-chip in a signal transmit end. The communication apparatus may implement functions performed by the signal transmit end in the foregoing aspect or the possible designs. The functions may be implemented by hardware. For example, in a possible design, the communication apparatus may include a processor and a communication interface. The processor may be configured to support the communication apparatus in implementing the functions in any one of the first aspect or the possible designs of the first aspect. For example, the processor is configured to send an SSB signal through the communication interface.

In another possible design, the communication apparatus may further include a memory. The memory is configured to store computer-executable instructions and data that are necessary for the communication apparatus. When the communication apparatus runs, the processor executes the computer-executable instructions stored in the memory, to enable the communication apparatus to perform the method according to any one of the first aspect or the possible designs of the first aspect.

According to a fourth aspect, a computer-readable storage medium is provided. The computer-readable storage medium may be a readable non-volatile storage medium. The computer-readable storage medium stores computer instructions or a program. When the computer instructions or the program is run on a computer, the computer is enabled to perform the method according to any one of the first aspect or the possible designs of the foregoing aspect.

According to a fifth aspect, a communication apparatus is provided. The communication apparatus may be a primary device or a chip or a system-on-a-chip in a primary device. The communication apparatus includes one or more processors and one or more memories. The one or more memories are coupled to the one or more processors. The one or more memories are configured to store computer program code. The computer program code includes computer instructions, and when the one or more processors execute the computer instructions, the primary device is enabled to perform the method according to any one of the first aspect or the possible designs of the first aspect.

According to a sixth aspect, a computer program product including instructions is provided. When the computer program product runs on a computer, the computer is enabled to perform the method according to any one of the first aspect or the possible designs of the foregoing aspect.

According to a seventh aspect, a chip system is provided. The chip system includes a processor and a communication interface. The chip system may be configured to implement functions performed by the signal transmit end in any one of the first aspect or the possible designs of the first aspect. For example, the processor is configured to send an SSB signal through the communication interface. In a possible design, the chip system further includes a memory, and the memory is configured to store program instructions and/or data. The chip system may include a chip, or may include a chip and another discrete component. This is not limited.

For technical effect achieved by any one of design manners of the second aspect to the seventh aspect, refer to the technical effect achieved by any one of the first aspect or the possible designs of the first aspect. Details are not described again.

According to an eighth aspect, a communication method is provided. The method includes: A signal receive end receives an SSB signal, where the SSB signal includes at least one of a PSS, an SSS, a PBCH, and a DMRS, and the SSB signal is sent in a manner of real-imaginary separation of a modulation signal. The signal receive end parses the SSB signal in the manner of the real-imaginary separation of the modulation signal, to obtain signals in the SSB signal.

In a possible implementation, the SSB signal is sent in an OQAM waveform.

In a possible implementation, the SSB signal is sent in an OQAM waveform and an orthogonal frequency division multiplexing (orthogonal frequency division multiplexing, OFDM) waveform.

In an example, when the SSB signal includes the DMRS and another signal, the DMRS in the SSB signal is sent in the OFDM waveform, and the signal in the SSB signal other than the DMRS is sent in the OQAM waveform and the OFDM waveform.

In another example, when the SSB signal includes the SSS and another signal, the SSS in the SSB signal is sent in the OFDM waveform, and the signal in the SSB signal other than the SSS is sent in the OQAM waveform.

In a possible implementation, the SSB signal is sent in an OQAM waveform and a DFT-s-OFDM waveform.

In an example, when the SSB signal includes the PSS signal and another signal, the PSS is sent in the DFT-s-OFDM waveform, and the another signal in the SSB signal is sent in the OQAM waveform.

In another possible implementation, the SSB signal is sent in an OQAM waveform, a DFT-s-OFDM waveform, and an OFDM waveform.

In an example, when the SSB signal includes a DMRS, a PSS, and another signal, the PSS may be sent in the DFT-s-OFDM waveform, the DMRS may be sent in the OFDM waveform, and the signal in the SSB signal other than the PSS and the DMRS may be sent in the OQAM waveform.

According to a ninth aspect, a communication apparatus is provided. The communication apparatus is used in a signal receive end, or a chip or a system-on-a-chip in a signal receive end, or may be a functional module that is in a signal receive end and that is configured to implement the method according to any one of the second aspect or the possible designs of the second aspect. The communication apparatus may implement functions performed by the signal receive end in the foregoing aspect or the possible designs, and the functions may be implemented by hardware executing corresponding software. The hardware or the software includes one or more modules corresponding to the functions. For example, the communication apparatus includes a processor and a communication interface.

The processor is configured to receive an SSB signal through the communication interface.

For a specific implementation of the communication apparatus, refer to a behavior function of the signal receive end in the communication method according to any one of the eighth aspect or the possible designs of the eighth aspect. Details are not described herein again. Therefore, the provided communication apparatus can achieve same beneficial effect as any one of the eighth aspect or the possible designs of the eighth aspect.

According to a tenth aspect, a communication apparatus is provided. The communication apparatus may be a signal receive end, or a chip or a system-on-a-chip in a signal receive end. The communication apparatus may implement functions performed by the signal receive end in the foregoing aspect or the possible designs. The functions may be implemented by hardware. For example, in a possible design, the communication apparatus may include a processor and a communication interface. The processor may be configured to support the communication apparatus in implementing the functions in any one of the eighth aspect or the possible designs of the eighth aspect. For example, the processor is configured to receive, through the communication interface, an SSB signal from a signal transmit end.

In another possible design, the communication apparatus may further include a memory. The memory is configured to store computer-executable instructions and data that are necessary for the communication apparatus. When the communication apparatus runs, the processor executes the computer-executable instructions stored in the memory, to enable the communication apparatus to perform the method according to any one of the eighth aspect or the possible designs of the eighth aspect.

According to an eleventh aspect, a computer-readable storage medium is provided. The computer-readable storage medium may be a readable non-volatile storage medium. The computer-readable storage medium stores computer instructions or a program. When the computer instructions or the program is run on a computer, the computer is enabled to perform the method according to any one of the eighth aspect or the possible designs of the foregoing aspect.

According to a twelfth aspect, a communication apparatus is provided. The communication apparatus may be a primary device or a chip or a system-on-a-chip in a primary device. The communication apparatus includes one or more processors and one or more memories. The one or more memories are coupled to the one or more processors. The one or more memories are configured to store computer program code. The computer program code includes computer instructions, and when the one or more processors execute the computer instructions, the primary device is enabled to perform the method according to any one of the eighth aspect or the possible designs of the eighth aspect.

According to a thirteenth aspect, a computer program product including instructions is provided. When the computer program product runs on a computer, the computer is enabled to perform the method according to any one of the eighth aspect or the possible designs of the foregoing aspect.

According to a fourteenth aspect, a chip system is provided. The chip system includes a processor and a communication interface. The chip system may be configured to implement functions performed by the signal receive end in any one of the eighth aspect or the possible designs of the eighth aspect. For example, the processor is configured to receive an SSB signal through the communication interface. In a possible design, the chip system further includes a memory, and the memory is configured to store program instructions and/or data. The chip system may include a chip, or may include a chip and another discrete component. This is not limited.

For technical effect achieved by any one of design manners of the ninth aspect to the fourteenth aspect, refer to the technical effect achieved by any one of the first aspect or the possible designs of the first aspect. Details are not described again.

According to a fifteenth aspect, this application provides a communication system, including a signal transmit end and a signal receive end. The signal transmit end is configured to perform the communication method according to any one of the first aspect and the possible implementations of the first aspect, and the signal receive end is configured to perform the communication method according to any one of the eighth aspect and the possible implementations of the eighth aspect.

### BRIEF DESCRIPTION OF DRAWINGS

FIG. 1 is a diagram of a peak to average ratio of a signal according to an embodiment of this application;
FIG. 2 is a diagram of multi-carrier superposition according to an embodiment of this application;
FIG. 3 is a diagram of a block diagram of a system of DFT-s-OFDM according to an embodiment of this application;
FIG. 4a and FIG. 4b are diagrams of a BPSK modulation scheme according to an embodiment of this application;
FIG. 5 is a diagram of a QPSK modulation scheme according to an embodiment of this application;
FIG. 6 is a diagram of a 16-QAM modulation scheme according to an embodiment of this application;
FIG. 7 is a diagram of a standard sine wave according to an embodiment of this application;
FIG. 8 is a diagram of a plurality of sine waves according to an embodiment of this application;
FIG. 9 is a diagram of an implementation of a single carrier according to an embodiment of this application;
FIG. 10 is a diagram of an implementation of another single carrier according to an embodiment of this application;
FIG. 11 is a diagram of an SC-QAM waveform according to an embodiment of this application;
FIG. 12 is a diagram of an SC-OQAM waveform according to an embodiment of this application;
FIG. 13 is a diagram of an implementation of another single carrier according to an embodiment of this application;
FIG. 14 is a diagram of frequency domain shaping according to an embodiment of this application;
FIG. 15 is a diagram of an SSB signal according to an embodiment of this application;
FIG. 16a and FIG. 16b are diagrams of a communication system according to an embodiment of this application;
FIG. 17 is a diagram of a structure of a communication apparatus according to an embodiment of this application; and
FIG. 18a to FIG. 18c are schematic flowcharts of signal sending according to an embodiment of this application;
FIG. 19 is a schematic flowchart of a communication method according to an embodiment of this application;
FIG. 20 is a diagram of a structure of an SSB signal according to an embodiment of this application;
FIG. 21 is a diagram of a structure of another SSB signal according to an embodiment of this application;
FIG. 22 is a spectrum graph according to an embodiment of this application;
FIG. 23 is a diagram of a structure of a communication apparatus according to an embodiment of this application; and
FIG. 24 is a diagram of a structure of another communication apparatus according to an embodiment of this application; and
FIG. 25 is a diagram of a structure of a communication system according to an embodiment of this application.

### DESCRIPTION OF EMBODIMENTS

Before embodiments of this application are described, related technical terms in embodiments of this application are explained and described. It should be noted that these explanations and descriptions are intended to facilitate understanding of embodiments of this application, and should not be construed as any limitation on the protection scope claimed in embodiments of this application.

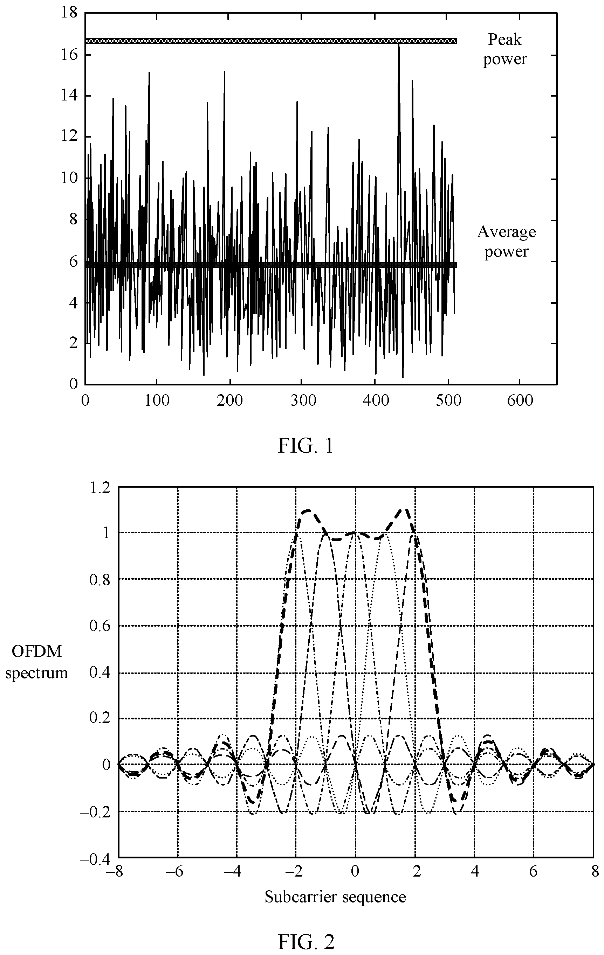

A PAPR may be referred to as a peak to average ratio, and is a ratio of peak power of a signal to total average power of a communication system. In time domain, the signal is a sine wave whose amplitude continuously changes, and the amplitude is not constant. Amplitude peaks of the signal in different periodicities are different, and therefore average power of the signal in the periodicities is also different. In a long time, the peak power is maximum instantaneous power that occurs at a specific probability (for example, 0.01%). The PAPR is a ratio of the peak power at the probability to the total average power of the communication system. For example, FIG. 1 is a diagram of a peak to average ratio.

In a communication case, factors that affect a peak to average ratio of a system may include the following factor 1 and factor 2.

### Factor 1: peak to average ratio of a baseband signal

Peak to average ratios of baseband signals varies with different modulation schemes. For example, a peak to average ratio of a baseband signal modulated through 1024-quadrature amplitude modulation (quadrature amplitude modulation, QAM) is large, and peak to average ratios of baseband signals modulated through quadrature phase shift keying (quadrature phase shift keying, QPSK) and binary phase shift keying (binary phase shift keying, BPSK) are 1. QPSK modulation and BPSK modulation may be understood as that a signal amplitude is constant, and only a phase is changed.

### Factor 2: peak to average ratio introduced by multi-carrier power superposition

The multi-carrier power superposition may be superposition of multi-carrier signals. For example, FIG. 2 is a diagram of superposition of multi-carrier signals in an OFDM system.

It can be learned from FIG. 2 that, in the OFDM system, a waveform on a specific carrier may be represented as a sinc function, and there are tails on left and right sides of the carrier. Tails of a plurality of carriers may be superposed at a specific probability, thereby forming a point with high peak power. In other words, a PAPR of a signal is excessively large. The excessively large PARP of the signal results in a signal distortion problem.

Specifically, when sending a signal to another device, a device in a communication system needs to first perform power amplification on the signal. However, due to limitations of technologies and costs, a power amplifier can perform linear amplification only within a range. When power of the signal exceeds the range, the signal is distorted. For example, for a microphone, when an amplitude of a sound is within a normal range, a sound obtained through amplification by the microphone is stable; or when the amplitude of the sound is large, for example, when the sound is a roar, the sound obtained through amplification by the microphone is unpleasant and shrill. It can be learned that when a received signal is distorted, a receive end cannot correctly parse the signal. Therefore, to ensure that a peak value of a signal is within a linear range of the power amplifier, average power of the signal needs to be reduced. However, reducing the average power of the signal may cause a decrease in efficiency of the power amplifier and a decrease in a coverage area of the signal.

In addition, because of abundant frequency band resources in a high frequency band, the high frequency band (namely, a millimeter wave frequency band, including 28 G, 39 G, 60 G, 73 G, and the like) may be used to meet increasing communication requirements. To achieve a high throughput, the high frequency band features a large bandwidth, a highly integrated wireless array, and the like. However, this comes with serious intermediate radio frequency distortion problems, such as a serious path loss, phase noise (phase noise, PHN), and a center frequency offset (center frequency offset, CFO). In addition, a high-frequency-band Doppler frequency shift is also larger. The foregoing plurality of problems all cause a phase error, resulting in performance deterioration of a high-frequency-band communication system, or even a failure to normal working.

To reduce the PAPR of the signal, the signal may be transmitted in a single-carrier form. For example, the signal may be transmitted in a discrete Fourier transform spread orthogonal frequency division multiplexing (discrete Fourier transform spread OFDM, DFT-s-OFDM) scheme. For example, a synchronization signal block (synchronization signal block, SS block) signal may be transmitted.

DFT-s-OFDM is a variant of a CP-OFDM signal, and may indicate that a specific quantity of modulation symbols are transformed into a frequency domain signal by performing Fourier transform; the frequency domain signal is filtered or directly mapped to a frequency domain subcarrier without filtering; then inverse Fourier transform is performed on the frequency domain signal, to convert the frequency domain signal into a time domain signal; and a cyclic prefix is added to obtain a to-be-sent signal.

CP-OFDM indicates a cyclic prefix OFDM signal. A waveform of the signal is that a modulation symbol obtained through modulation is mapped to a frequency domain subcarrier; then inverse Fourier transform is performed on the mapped modulation symbol, to convert a frequency domain signal into a time domain signal; and a cyclic prefix is added to obtain a to-be-sent signal.

DFT-s-OFDM may also be referred to as a linear precoding OFDM technology, and indicates that additional discrete Fourier transform (discrete Fourier transform, DFT) processing is performed before a conventional OFDM process. DFT-s-OFDM is a signal generation scheme for an uplink and a downlink in long term evolution (long term evolution, LTE).

DFT-s-OFDM may be equivalent to performing a DFT-mapping-IFFT operation on OFDM. That is, before DFT is performed on OFDM, convolution is performed on an input signal and a Sinc waveform. From a physical essence, DFT-s-OFDM is still a single carrier. In comparison with OFDM, DFT-s-OFDM has a small PAPR. This can improve power transmission efficiency of a terminal device, prolong a service life of a battery, and reduce costs of the terminal device.

Frequency domain spectrum shaping (frequency domain spectrum shaping, FDSS)-based DFT-s-OFDM indicates that additional frequency domain replication is performed after DFT, and then a filter is multiplied by a signal obtained through the frequency domain replication, to implement a frequency domain repetition effect. Because the frequency domain spectrum shaping is performed, which is equivalent to that a waveform in time domain changes from a sinc waveform of DFT-s-OFDM to another waveform with a more limited time length/a lower sideband envelope, a PARP of DFT-s-OFD can be reduced. FDSS-based DFT-s-OFDM is an alternative waveform technology for future mobile communication (for example, the sixth generation (6^{th} generation, 6G) +) and high-frequency-band scenarios.

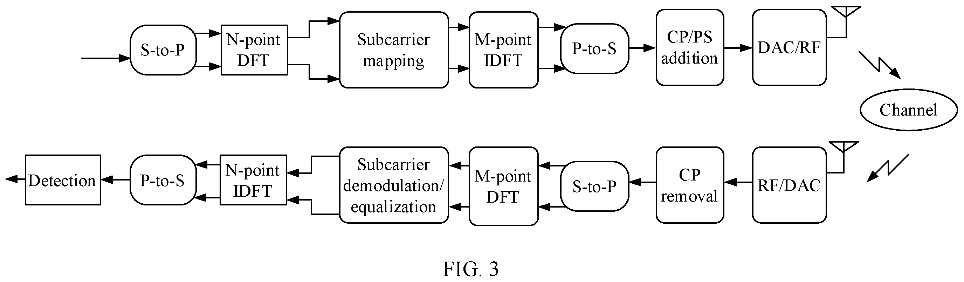

In an example, FIG. 3 is a block diagram of a system for implementing DFT-s-OFDM. In FIG. 3, both M and N are positive integers, and N is less than M. S-to-P indicates serial to parallel (serial to parallel), and P-to-S indicates parallel to serial (parallel to serial).

As shown in FIG. 3, steps performed by a signal transmit end include S-to-P, N-point (point) DFT, subcarrier mapping (subcarrier mapping), M-point IDFT, P-to-S, cyclic prefix (cyclic prefix, CP)/prefix symbol (prefix symbol, PS) addition (add), and D/A converter (digital-to-analog converter, DAC)/radio frequency (radio frequency, RF) processing. The signal transmit end may send a signal to a signal receive end through a channel. Steps performed by the signal receive end may include RF/DAC processing, CP removal, M-point DFT, subcarrier demodulation/equalization (subcarrier demapping/equalization), N-point inverse discrete Fourier transform (inverse discrete fourier transform, IDFT), P-to-S, and detection (detect).

In a communication system, information that needs to be transmitted is generally represented by using 0 and 1 bit. However, a radio signal is generally an analog signal with a frequency, an amplitude, and a phase. Therefore, information bits may be carried on a radio signal through modulation.

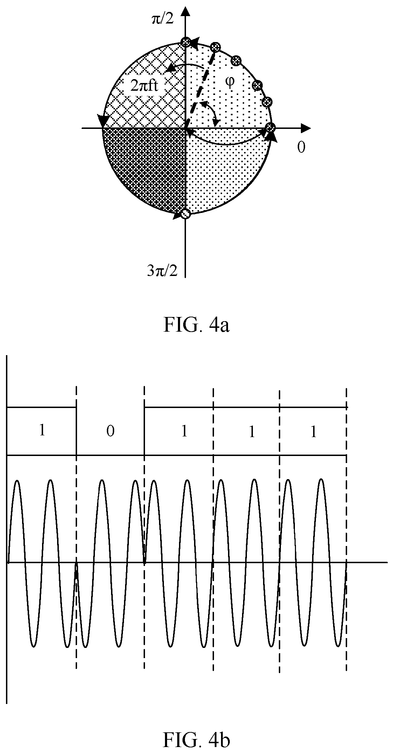

BPSK modulation is used as an example. As shown in FIG. 4a, a phase of an information bit 1 is 0, and a phase of an information bit 0 is π. A signal is located on a real axis.

For example, as shown in FIG. 4b, an input information bit is 10111, and a sine wave corresponding to the information bit is sent. It may be understood that, a location of the information bit 0 corresponds to a sine wave start phase π.

An amplitude of the BPSK modulation is 1 (after normalization). If the amplitude can change, a more abundant modulation constellation diagram may be obtained, for example, QPSK, 16-QAM, 64-QAM, and 256-QAM.

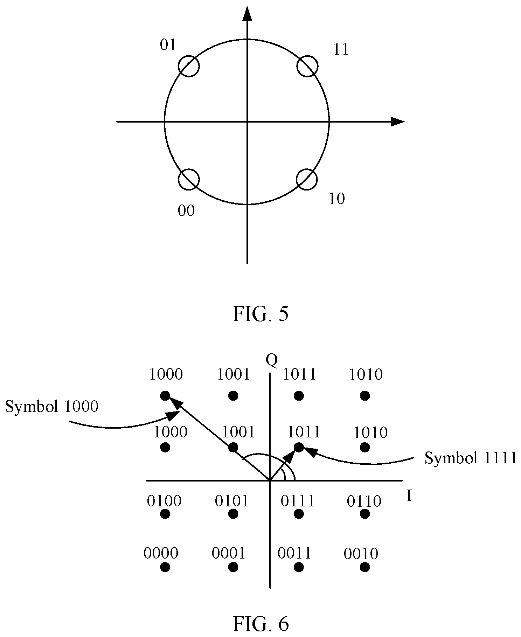

In an example, as shown in FIG. 5, in QPSK modulation, one point (which may be referred to as one symbol) may correspond to two information bits, and each symbol may correspond to an amplitude and a phase. An amplitude of QPSK is constant, and phase differences between points are π/2.

In another example, as shown in FIG. 6, in 16-QAM modulation, one point (which may be referred to as one symbol) may correspond to four information bits (2⁴=16). Each symbol may correspond to an amplitude and a phase. The 16-QAM may have a plurality of amplitudes, and phases of points are also different.

In another example, in 1024-QAM, one symbol may correspond to 10 information bits (2¹⁰=1024).

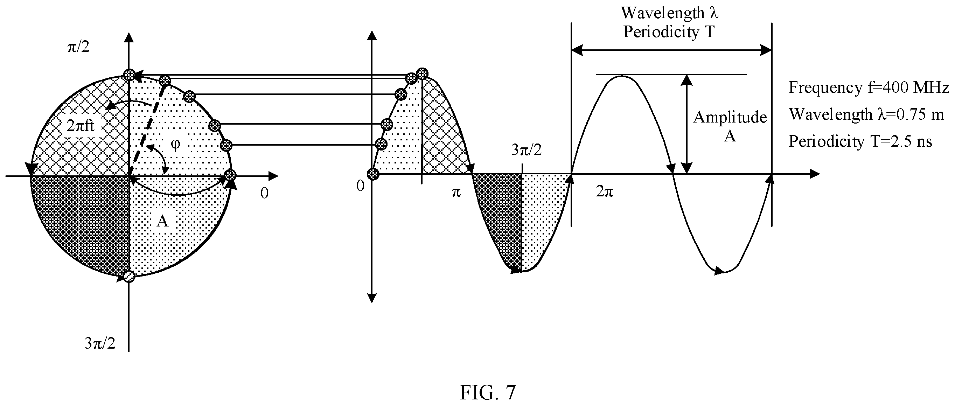

Fourier transform is one of the most important tools for signal processing in a communication system. It bridges time domain and frequency domain. Generally, a signal is a time domain signal. For example, various sounds in daily life are essentially time domain signals. For example, as shown in FIG. 7, a signal formed by a standard sine wave (a sine wave whose f=400 MHz) is a time domain signal, and may be understood as that an amplitude of the signal changes with time.

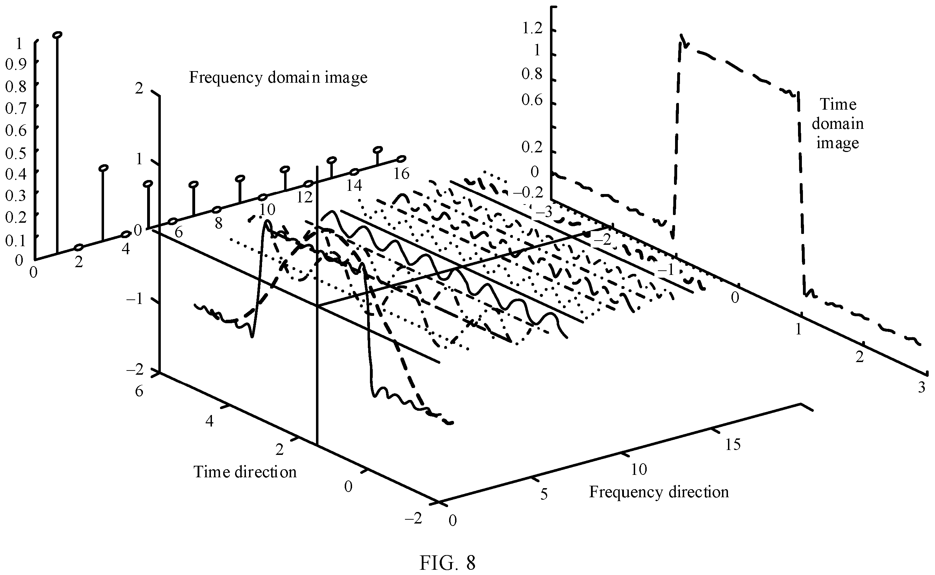

In a periodicity, a location of the signal may be understood as a phase, and is generally represented by an angle. Alternatively, as shown in FIG. 7, the signal may be mapped to an angle φ on a unit circle. A periodicity T of the sine signal is fixed. Because f=1/T, a frequency of the sine signal is also constant. It may be understood that the sine signal is an impulse (namely, a straight line with a line length indicating an amplitude) on a frequency axis. For example, the sine signal is shown in FIG. 8.

In fourth generation (fourth generation, 4G) LTE and 5G new radio (new radio, NR) systems, a radio signal sent over an air interface (free space) may be simply understood as superposition of a plurality of sine signals. In frequency domain, the signal may be represented as a plurality of pulses with different amplitudes, and in time domain, the signal is an approximate square wave.

Fourier transform can quickly transform a time domain signal into a frequency domain signal or transform a frequency domain signal into a time domain signal. From a perspective of frequency domain, the signal is simple. Based on a feature of the Fourier transform, the signal may be processed in frequency domain, to reduce signal processing complexity.

An SSB may include at least one of a channel state information reference signal (channel state information reference signal, CSI-RS), a reference signal, and system information. The SS block may correspond to one or more OFDM symbols. The SS block includes at least one of the following: a PSS, an SSS, a PBCH, and a DMRS.

The SSB may also be referred to as an SS/PBCH block. A plurality of signals in the SS block or the SS/PBCH block may be sent through a same antenna port. The SSB may be used by a terminal device and a network device to implement time-frequency synchronization and detect a cell physical identity (identity, ID). The PSS may be used for time-frequency synchronization and cell detection of the terminal device. The SSS may be used to transmit a cell physical identity ID. Alternatively, the PSS and the SSS may be combined to implement the foregoing functions.

The PBCH may be used to transmit system information. The SS/PBCH block may further include an SS and a PBCH, and are used by the terminal device and the network device to implement time synchronization, detection of a cell physical identity (ID), and obtaining of the system information.

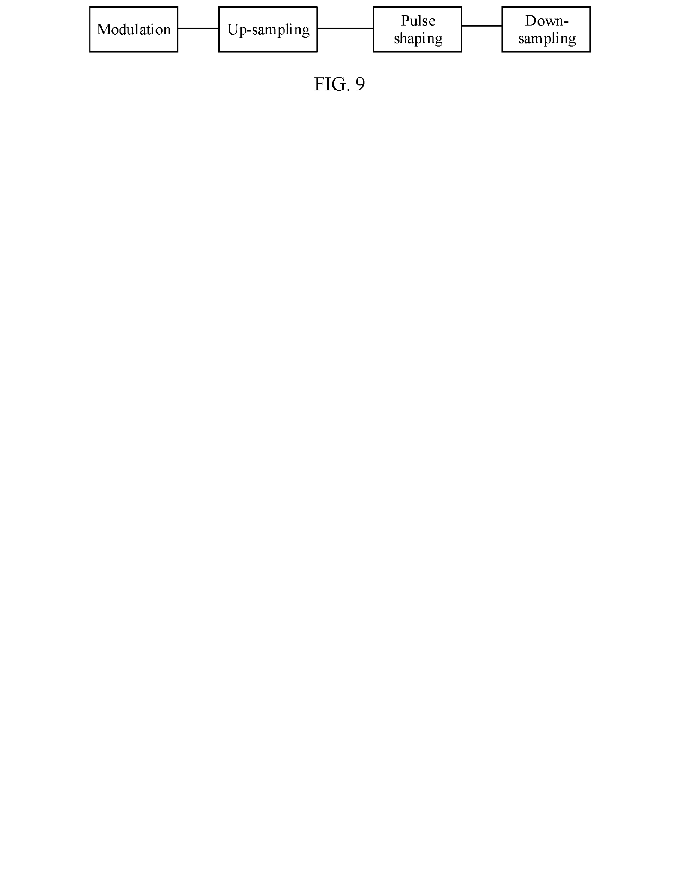

In an example, FIG. 9 shows an implementation of a single carrier (SC-QAM). In FIG. 9, a signal transmit end first modulates (modulation) data information (namely, encoded 0 and 1 information) into a modulation signal. The modulation signal may be a QAM modulation signal, or may be a phase modulation signal or another signal. This is not limited. After the modulation signal is obtained, up-sampling (up-sampling) may be performed on modulation information, to repeat a symbol of the modulation signal. In embodiments of this application, for up-sampling, refer to the conventional technology. Details are not described. After up-sampling is performed on the modulation signal, pulse shaping (pulse shaping) may be performed, that is, a filter is used to filter the modulation signal, to shape the modulation signal, reduce a PAPR of the signal, limit a transmission bandwidth of the signal, or remove interference. Then, down-sampling (down-sampling) is performed on the modulation signal, that is, the modulation signal is extracted, and an extracted signal is sent to a radio frequency module, and sent to a terminal device through an antenna.

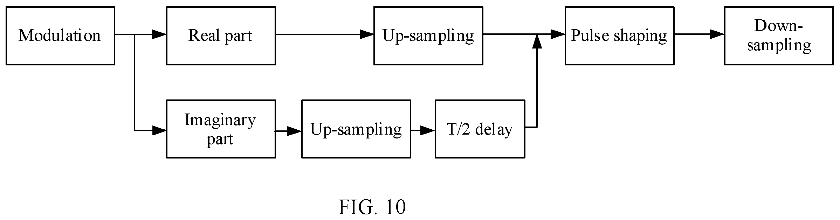

In another example, FIG. 10 shows an implementation of another single carrier (SC-OQAM). In comparison with the technical solution in FIG. 9, in FIG. 10, a real part of a modulation signal is separated from an imaginary part of the modulation signal, and a T/2 delay (delay) is performed on one of the signals. Other processes are the same as those in FIG. 9. Details are not described again.

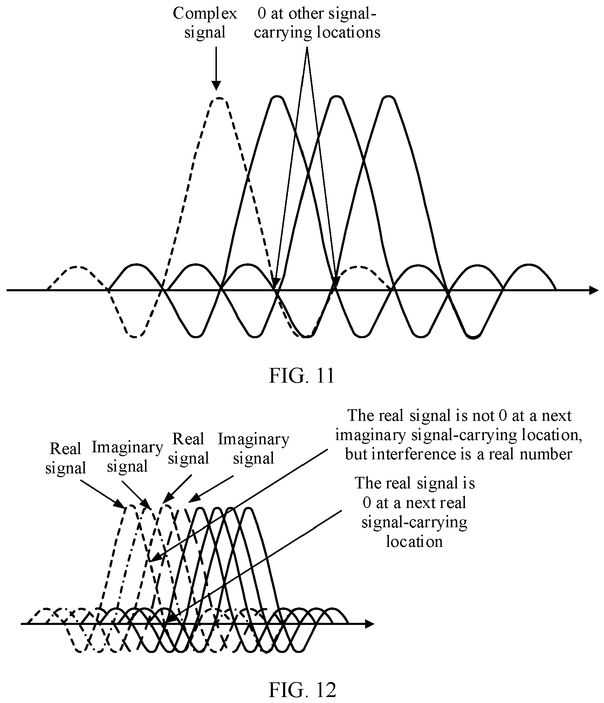

In embodiments of this application, SC-QAM carries a complex signal (a QAM signal or the like), and a filter may be an RRC filter. For example, FIG. 11 is an SC-QAM waveform diagram. It can be learned from FIG. 11 that an SC-QAM waveform is complex-orthogonal, and one SC-QAM waveform carries one complex signal. A relationship between the SC-QAM waveform shown in FIG. 11 and a next SC-QAM waveform carrying a signal is an orthogonal relationship. In other words, an amplitude of the SC-QAM waveform is 0 at a sampling point of the next SC-QAM waveform carrying the signal.

For another example, FIG. 12 is an SC-OQAM waveform diagram. An SC-OQAM waveform includes a real part and an imaginary part, and the real part and the imaginary part are in a partially orthogonal relationship. The partial orthogonal relationship indicates partial interference.

It can be learned from FIG. 12 that one S-OQAM waveform carries a signal whose real part and imaginary part are separated from each other, and the SC-OQAM waveform and a next SC-OQAM waveform carrying a signal are in a non-orthogonal relationship (in other words, the SC-OQAM waveform is not 0 at a sampling point of the next SC-OQAM waveform carrying the signal). However, because information carried by the next SC-OQAM waveform carrying the signal is orthogonal, interference is orthogonal to the signal. The waveform is orthogonal to next two waveforms carrying signals. Therefore, the SC-OQAM waveform is orthogonal to the next two signals.

Based on the partial orthogonal relationship of the SC-OQAM waveform, when the real part signal is required, a receive end may discard the imaginary part signal, and when the imaginary part signal needs to be received, the receive end may discard the real part signal. In this way, information can be correctly replied. Because a wave peak of the real part waveform superposes a non-wave peak of the imaginary part signal, this wave peak staggering manner can effectively reduce a PAPR.

The following separately describes a frequency domain implementation of the SC-OQAM.

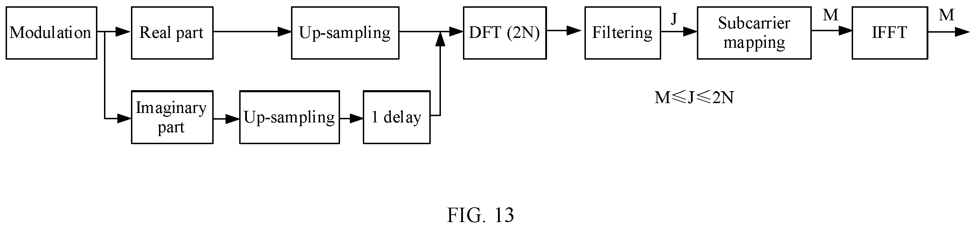

In an example, as shown in FIG. 13, in comparison with the technical solution in FIG. 10, the technical solution in FIG. 13 has the following two improvements.

According to a first aspect, QAM constellation points used in a DFT-s-OFDM-OQAM system are split into a real part signal and an imaginary part signal (or an input signal may be directly defined as a PAM signal, instead of a QAM signal). Next, two-fold up-sampling is performed, that is, the real part signal becomes [X, 0, X, 0, X, 0,...], and the imaginary part signal becomes [jY, 0, jY, 0, jY, 0,...]. Then, a delay is performed on the imaginary part signal, and the imaginary part signal becomes [0, jY, 0, jY, 0, jY,...]. The imaginary part signal and the real part signal are combined into [X, jY, X, jY, X, jY,...] In embodiments of this application, the imaginary part signal may alternatively be implemented in another manner, but a final signal form is [X, jY, X, jY, X, jY,...], namely, a signal obtained through real-imaginary separation. However, a total length of the signal becomes twice a length of the original complex modulation signal. Then, 2N-point DFT transform is performed on symbols obtained through phase rotation/real-imaginary separation, where N is a positive integer.

According to a second aspect, frequency domain shaping is performed on a signal obtained through the 2N-point DFT. A specific manner is as follows:
In the first aspect, real-imaginary separation-based QAM constellation modulation is used, a length of a signal is twice that of conventional QAM constellation modulation, and a quantity of DFT points is also twice that of DFT points of the QAM constellation modulation. Therefore, actually, data obtained through the DFT is redundant. Therefore, frequency domain filtering may be performed on the redundant signal in a truncation manner.

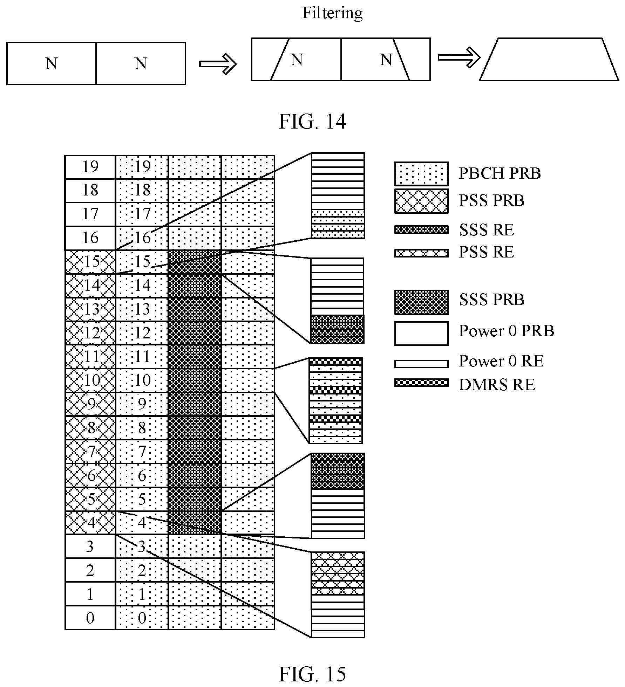

For example, as shown in FIG. 14, truncation indicates that a bandwidth of a filter is less than a bandwidth after the DFT. For example, if the bandwidth after the DFT is 100 resource blocks, the frequency domain filter may be designed to have a length of 60 resource blocks. A filtering process is that the frequency domain filter is directly multiplied by a signal obtained through the DFT. A length of the filter may be 2N, and some values are 0. Because the signal is redundant, truncated filtering does not cause a performance loss. Finally, after zero padding is performed to perform M-point IFFT transform, a CP is added, and sending is performed.

It can be learned from the foregoing descriptions that, the SC-OQAM essentially is to separate a real part from an imaginary part to pass through a shaping filter. A smaller PAPR is obtained in this implementation than that in a conventional complex number implementation. This is because signals after real-imaginary separation are staggered, instead of being superposed. In this application, regardless of a time domain generation method or a frequency domain generation method, a common input signal may be considered as a signal whose real part and imaginary part are separated from each other and that is of [X, jY, X, jY, X, jY,...] or [jY, X, jY, X, jY, X,...]. It may be understood that, in this application, a location at which a real signal X is sent is a real signal location, and a location at which an imaginary signal jY is sent is an imaginary signal location.

After the implementation of the SC-OQAM is described, the following describes an implementation of an NR-based SSB signal.

The NR-based SSB signal is implemented based on an OFDM waveform. In NR, an SSB signal may include four OFDM symbols. The four symbols may carry a PSS, a PBCH, an SSS, and a PBCH in the SSB signal. For example, distribution of the SSB signal on the four OFDM symbols may be shown in FIG. 15. A frequency domain resource size of a signal on each OFDM symbol is 20 physical resource blocks (physical resource blocks, PRBs) and 288 resource elements (resource elements, REs). Specific signal locations may be shown in Table 1.

**Table 1**

| Signal | OFDM symbol index of the SSB | Subcarrier locations of the SSB signal relative to an initial subcarrier of the SSB |
|---|---|---|
| PSS | 0 | 56, 57, ..., and 182 |
| SSS | 2 | 56, 57, ..., and 182 |
| Set to 0 | 0 | 0, 1, ..., 55, 183, 184, ..., and 239 |
| | 2 | 48, 49, ..., 55, 183, 184, ..., and 191 |
| PBCH | 1 and 3 | 0, 1, ..., and 239 |
| | 2 | 0, 1, ..., 47, 192, 193, ..., and 239 |
| DM-RS for PBCH | 1 and 3 | 0+v, 4+v, 8+v, ..., and 236+v |
| | 2 | 0+v, 4+v, 8+v, ..., and 44+v |
| | | 192+v, 196+v, ..., and 236+v |

The data in Table 1 is merely an example, and a location of a signal on each OFDM symbol may further include another location. This is not limited.

In an existing protocol, a time domain location of the SSB signal is fixed in a half-frame, and the time domain location of the SSB signal includes five patterns (patterns), which are respectively pattern A to pattern E.

The pattern A is mainly for a 15 kilohertz (kHz) subcarrier spacing, the pattern B and the pattern C are mainly for a 30 kHz subcarrier spacing, the pattern D is mainly for 120 kHz, and the pattern E is mainly for 240 kHz.

In embodiments of this application, time domain locations of each pattern in a half-frame are fixed. For example, time domain locations of the pattern A are {2, 8}+14×n. When a carrier frequency or an operating frequency band is less than 3 GHz, a value of n may be 0 or 1. When the carrier frequency or the operating frequency band is greater than 3 GHz and less than 6 GHz, the value of n may be 0, 1, 2, or 3.

For another example, time domain locations of the pattern B are {4, 8, 16, 20}+28×n. When a carrier frequency or an operating frequency band is less than 3 GHz, a value of n may be 0. When the carrier frequency or the operating frequency band is greater than 3 GHz and less than 6 GHz, the value of n is 0 or 1.

For another example, time domain locations of the pattern C are {2, 8}+14×n. When a carrier frequency or an operating frequency band is less than 3 GHz, a value of n may be 0 or 1. When the carrier frequency or the operating frequency band is greater than 3 GHz and less than 6 GHz, the value of n may be 0, 1, 2, or 3.

For another example, time domain locations of the pattern D are {4, 8, 16, 20}+28×n. When a carrier frequency or an operating frequency band is greater than 6 GHz, a value of n may be 0, 1, 2, 3, 5, 6, 7, 8, 10, 11, 12, 13, 15, 16, 17, or 18.

For another example, time domain locations of the pattern E are {8, 12, 16, 20, 32, 36, 40, 44}+56×n. A value of n may be 0, 1, 2, 3, 5, 6, 7, or 8.

In embodiments of this application, distribution of symbols occupied by the SSB signal may be that a 1^{st} symbol is a PSS, a 2^{nd} symbol is a PBCH, a 3^{rd} symbol is a PBCH and an SSS, and a 4^{th} symbol is a PBCH. The symbol on which the PBCH is located includes a DMRS of the PBCH. A periodicity of the SSB signal may have five configurations, and may be any one of 5 milliseconds (ms), 10 ms, 20 ms, 40 ms, 80 ms, and 160 ms.

Certainly, the distribution of the symbols included in the SSB signal may further include another manner. For example, the PSS, the SSS, and the PBCH each may occupy one OFDM symbol. For another example, the PSS and the SSS each may independently occupy one OFDM symbol. For another example, the PSS and the SSS may share one OFDM symbol. For another example, the PSS and the PBCH may share one OFDM symbol. Different signals use different waveforms. For example, all signals in the SSB signal use a DFT-s-OFDM waveform. For another example, the SSS in the SSB signal uses the DFT-s-OFDM waveform, or the PBCH uses the DFT-s-OFDM waveform, or the DMRS and the PSS use an OFDM waveform, and the PBCH and the SSS use the DFT-s-OFDM waveform.

It can be learned from the foregoing descriptions that the SSB is based on OFDM or DFT-s-OFDM, and is not based on OQAM. However, in comparison with OFDM and DFT-s-OFDM, the OQAM has better performance. In view of this, to improve transmission efficiency of the SSB signal, a transmit end may transmit the SSB signal in a manner of real-imaginary separation of a modulation signal (or the OQAM).

The following describes the implementations of embodiments of this application in detail with reference to accompanying drawings.

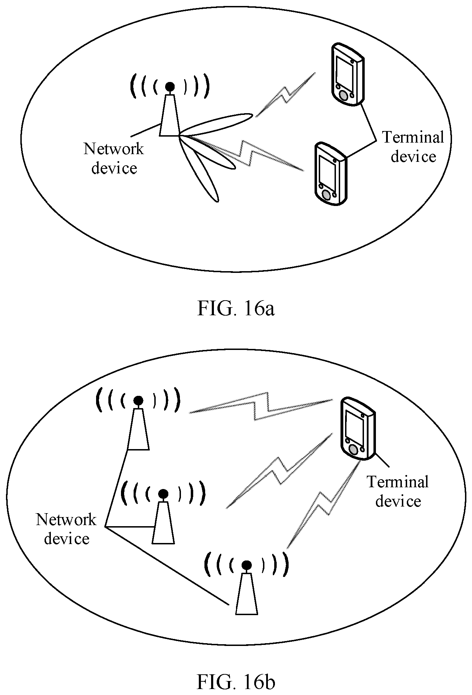

As shown in FIG. 16a and FIG. 16b, a communication system provided in an embodiment of this application may be a 3^{rd} Generation Partnership Project (3^{rd} generation partnership project, 3GPP) communication system, for example, an LTE mobile communication system, a 5G mobile communication system, an NR system, an NR vehicle-to-everything (vehicle-to-everything, V2X) system, or another next-generation communication system, or may be a non-3GPP communication system. This is not limited. The following uses FIG. 11 as an example to describe a communication method provided in embodiments of this application.

FIG. 16a is a simplified diagram of a communication system according to an embodiment of this application. As shown in FIG. 16a, the communication system may include one network device and a plurality of terminal devices. The plurality of terminal devices are all communicatively connected to the network device. FIG. 16b is a simplified diagram of another communication system according to an embodiment of this application. As shown in FIG. 16b, the communication system may include a plurality of network devices and one terminal device. The terminal device may be communicatively connected to each network device. For example, the terminal device may be located in an overlapping area of signal coverage of the plurality of network devices.

The network device in FIG. 16a and FIG. 16b is an apparatus that is deployed in a radio access network and that provides a wireless communication function for the terminal device. In other words, the network device may be configured to communicate with the terminal device. For example, the network device may include an evolved NodeB (NodeB, eNB, or e-NodeB, evolved NodeB) in an LTE system or an LTE-advanced (LTE-advanced, LTE-A) system, for example, a conventional macro base station eNB and a micro base station eNB in a heterogeneous network scenario. Alternatively, the network device may include a next generation NodeB (next generation NodeB, gNB) in an NR system. Alternatively, the network device may include a transmission reception point (transmission reception point, TRP), a home base station (for example, a home evolved NodeB or a home NodeB, HNB), a baseband unit (baseband unit, BBU), a baseband pool (BBU pool), a wireless fidelity (wireless fidelity, Wi-Fi) access point (access point, AP), or the like. Alternatively, the network device may include a base station in a non-terrestrial network (non-terrestrial network, NTN), that is, may be deployed on an airplane platform or a satellite. In the NTN, the network device may be used as a layer 1 (L1) relay (relay), may be used as a base station, or may be used as an integrated access and backhaul (integrated access and backhaul, IAB) node. Alternatively, the network device may be a device that is in an IoT and that implements functions of a base station, for example, a device that is in uncrewed aerial vehicle communication, V2X, D2D, or machine-to-machine (machine-to-machine, M2M) and that implements the functions of the base station.

In some possible scenarios, the network device may alternatively be a module or unit that can implement some functions of a base station. For example, the network device may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, a CU (or a CU-CP and a CU-UP), a DU, or an RU may also have different names, but a person skilled in the art may understand meanings thereof. For example, the network device may be a network device in an open radio access network (open RAN, ORAN) system or a module of a network device. In an ORAN system, a CU may also be referred to as an open (open, O)-CU, a DU may also be referred to as an O-DU, a CU-CP may also be referred to as an O-CU-CP, a CU-UP may also be referred to as an O-CU-UP, and an RU may also be referred to as an O-RU. Any one of the CU (or the CU-CP or the CU-UP), the DU, and the RU in this application may be implemented by using a software module, a hardware module, or a combination of a software module and a hardware module.

Optionally, the base station in embodiments of this application may include various forms of base stations, for example, a macro base station, a micro base station (or referred to as a small cell), a relay station, an access point, a home base station, a TRP, a transmitting point (transmitting point, TP), or a mobile switching center. This is not specifically limited in embodiments of this application.

In embodiments of this application, the network device may further perform radio resource management, control, and scheduling according to a specific policy and means, so that limited radio network resources are fully used as much as possible while a quality of service requirement is met, to ensure that a planned coverage area is reached, and a service capacity and resource utilization are improved as much as possible.

A form of the network device is not limited in embodiments of this application. An apparatus configured to implement a function of the network device may be a network device, or may be an apparatus, for example, a chip system, that can support the network device in implementing the function. The apparatus may be mounted in the network device or used in cooperation with the network device.

The terminal device in embodiments of this application may be user equipment (user equipment, UE) in a 5^{th} generation (5^{th} generation, 5G) mobile communication technology network or an evolved public land mobile network (public land mobile network, PLMN) after 5G, an access terminal, a terminal unit, a subscriber station, a terminal station, a mobile station, a remote station, a remote terminal, a user terminal (terminal equipment, TE), a mobile device, a wireless communication device, a terminal agent, a tablet computer (pad), a handheld device with a wireless communication function, a computing device or another processing device connected to a wireless modem, a vehicle-mounted device, a vehicle-mounted transceiver unit, a wearable device, or a terminal apparatus. The access terminal may be a cellular phone, a cordless phone, a session initiation protocol (session initiation protocol, SIP) phone, a wireless local loop (wireless local loop, WLL) station, personal digital assistant (personal digital assistant, PDA), a handheld device with a wireless communication function, a computing device or another processing device connected to a wireless modem, a vehicle-mounted device, an uncrewed aerial vehicle, a robot, a smart point of sale (point of sale, POS) machine, customer-premises equipment (customer-premises equipment, CPE) or a wearable device, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. Alternatively, the terminal device may be a terminal having a communication function in internet of things (internet of things, IoT), for example, a terminal in V2X (for example, an internet of vehicles device), a terminal in D2D communication, or a terminal in M2M communication. The terminal device may be mobile or fixed.

A form of the terminal device is not limited in embodiments of this application. An apparatus for implementing a function of the terminal device may be a terminal device, or may be an apparatus, for example, a chip system, that can support the terminal device in implementing the function. The apparatus may be mounted in the terminal device or used in a manner of matching the terminal device. In embodiments of this application, the chip system may include a chip, or may include a chip and another discrete component.

It should be noted that FIG. 16a and FIG. 16b are example accompanying drawings, and a quantity of devices shown in FIG. 16a and FIG. 16b and names of interfaces between the devices in FIG. 16a and FIG. 16b are not limited. In addition to the network elements shown in FIG. 16a and FIG. 16b, the communication system shown in FIG. 16a and FIG. 16b may include another device, for example, a core network device. This is not limited.

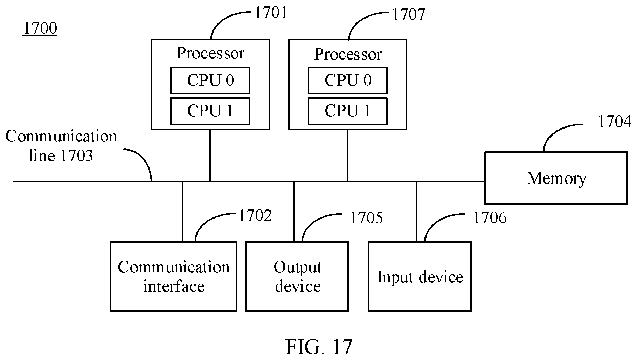

During specific implementation, the devices in FIG. 16a and FIG. 16b each may use a composition structure shown in FIG. 17, or include components shown in FIG. 17. FIG. 17 is a composition diagram of a communication apparatus 1700 according to an embodiment of this application. The communication apparatus 1700 may be a primary device or a chip or a system-on-a-chip in a primary device. Alternatively, the communication apparatus 1700 may be a secondary device or a chip or a system-on-a-chip in a secondary device. As shown in FIG. 17, the communication apparatus 1700 includes a processor 1701, a communication interface 1702, and a communication line 1703.

Further, the communication apparatus 1700 may further include a memory 1704. The processor 1701, the memory 1704, and the communication interface 1702 may be connected to each other through the communication line 1703.

The processor 1701 is a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 1701 may be another apparatus with a processing function, for example, a circuit, a component, or a software module. This is not limited.

The communication interface 1702 is configured to communicate with another device or another communication network. The another communication network may be an Ethernet, a radio access network (radio access network, RAN), a wireless local area network (wireless local area network, WLAN), or the like. The communication interface 1202 may be a module, a circuit, a communication interface, or any apparatus that can implement communication.

The communication line 1703 is configured to transmit information between components included in the communication apparatus 1200.

The memory 1704 is configured to store instructions. The instructions may be computer programs.

The memory 1704 may be a read-only memory (read-only memory, ROM) or another type of static storage device that can store static information and/or instructions; may be a random access memory (random access memory, RAM) or another type of dynamic storage device that can store information and/or instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or the like. This is not limited.

It should be noted that the memory 1704 may be independent of the processor 1701, or may be integrated with the processor 1701. The memory 1704 may be configured to store instructions, program code, some data, or the like. The memory 1704 may be located inside the communication apparatus 1700, or may be located outside the communication apparatus 1700. This is not limited. The processor 1701 is configured to execute the instructions stored in the memory 1704, to implement a data transmission method applied to short-range wireless communication that is provided in the following embodiments of this application.

In an example, the processor 1701 may include one or more CPUs, for example, a CPU 0 and a CPU 1 in FIG. 17.

In an optional implementation, the communication apparatus 1700 includes a plurality of processors. For example, in addition to the processor 1701 in FIG. 17, the communication apparatus 1700 may include a processor 1707.

In an optional implementation, the communication apparatus 1700 further includes an output device 1705 and an input device 1706. For example, the input device 1706 is a device, for example, a keyboard, a mouse, a microphone, or a joystick, and the output device 1705 is a device, for example, a display or a speaker (speaker).

It should be noted that the communication apparatus 1700 may be a desktop computer, a portable computer, a network server, a mobile phone, a tablet computer, a wireless terminal, an embedded device, a chip system, or a device having a structure similar to that in FIG. 17. In addition, the composition structure shown in FIG. 17 does not constitute a limitation on a primary device and a secondary device. In addition to the components shown in FIG. 17, the primary device and the secondary device may include more or fewer components than those shown in the figure, or combine some components, or have different component arrangements.

In embodiments of this application, the chip system may include a chip, or may include a chip and another discrete component.

In addition, actions, terms, and the like in embodiments of this application may be mutually referenced. This is not limited. In embodiments of this application, names of information exchanged between devices, names of parameters in the information, or the like are merely examples. During specific implementation, other names may alternatively be used. This is not limited.

In embodiments of this application, the word "example", "for example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, "a plurality of" means two or more than two unless otherwise specified.

In some embodiments, an embodiment of this application provides a signal sending procedure. An execution device of the signal sending procedure may be the network device in FIG. 16a and FIG. 16b, or may be the terminal device in FIG. 16a and FIG. 16b.

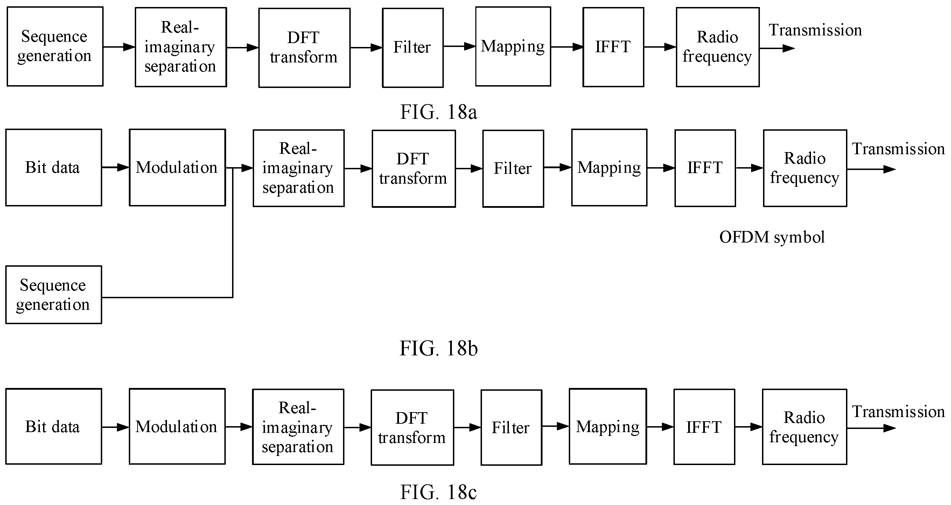

FIG. 18a is a diagram of sending a signal in an OQAM waveform. The signal sending procedure may include sequence generation, real-imaginary separation, DFT transform, filtering, mapping, IFFT, and transmission.

The real-imaginary separation may indicate to separate a real part of a modulated signal from an imaginary part of the modulated signal. The DFT transform may indicate to transform a time domain modulation symbol into DFT in frequency domain. Filtering indicates to perform filtering on a signal. Filtering may be an optional step. Mapping may indicate to map a signal to a plurality of carriers. The IFFT may indicate to perform frequency domain Fourier transform on a signal, convert a time-domain signal into a frequency-domain signal, and add a cyclic prefix (namely, a +CP operation). The transmission may indicate to send a baseband signal through a radio frequency.

FIG. 18b is a diagram of sending a plurality of signals on one OFDM symbol in an OQAM waveform. In comparison with FIG. 18a, a modulation process is added. Modulation may indicate to modulate a data bit signal to a modulated symbol. For other steps in FIG. 18b, refer to the foregoing descriptions. Details are not described again.

FIG. 18c is a diagram of signal sending. Specifically, refer to the descriptions of FIG. 18a and FIG. 18b. Details are not described again.

In embodiments of this application, when sending an extremely large signal, a signal transmit end may send the extremely large signal in a manner of a beam. The beam may be a wide beam, a narrow beam, or another type of beam. A technology for forming the beam may be a beamforming technology or another technical means.

The beamforming technology may be specifically a digital beamforming technology, an analog beamforming technology, or a hybrid digital/analog beamforming technology. Different beams may be considered as different resources. Same information or different information may be sent through different beams.

In an example, a plurality of beams having a same or similar communication feature may be considered as one beam. One beam may include one or more antenna ports, configured to transmit a data channel, a control channel, a sounding signal, and the like.

For example, a transmit beam may be signal strength distribution formed in different directions in space after a signal is transmitted through an antenna, and a receive beam may be signal strength distribution in different directions in space of a radio signal received from an antenna. It may be understood that one or more antenna ports forming one beam may also be considered as one antenna port set. The beam may alternatively be represented as a spatial filter (spatial filter) in a communication protocol.

The following describes the communication method provided in embodiments of this application with reference to the communication system shown in FIG. 16a and FIG. 16b. A signal transmit end and a signal receive end in the following embodiments may have the components shown in FIG. 17. Details are not described again. The signal transmit end may be the network device in FIG. 16a and FIG. 16b, and the signal receive end may be the terminal device in FIG. 16a and FIG. 16b. Alternatively, the signal transmit end may be the terminal device in FIG. 16a and FIG. 16b, and the signal receive end may be the network device in FIG. 16a and FIG. 16b.

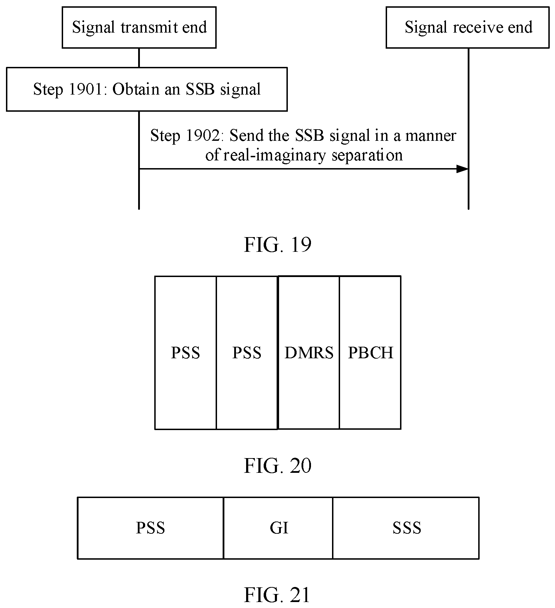

FIG. 19 is a flowchart of a communication method according to an embodiment of this application. As shown in FIG. 19, the method may include the following steps.

Step 1901: A signal transmit end obtains an SSB signal.

The SSB signal may include at least one of a PBDH, a DMRS, a PSS, and an SSS. The following describes the PBDH, the DMRS, the PSS, and the SSS.
1. The PBCH may carry some related information of a cell, for example, cell access information, cell time information, or access bandwidth information.
2. The DMRS may carry some information of the SSB signal, for example, time information or SSB time index information. In embodiments of this application, the DMRS may be generated by using a pseudo random sequence, for example, generated by using any one of an m-sequence, a gold sequence, or a ZC sequence. Certainly, the DMRS may further be used for channel estimation. M is a positive integer.
3. The PSS may carry some information of a network device, for example, may carry identity information of the cell. In embodiments of this application, the PSS may also be generated by using a pseudo random sequence, for example, generated by using any one of an m-sequence, a gold sequence, or a ZC sequence.
4. The SSS may carry identification information or other information of the cell. In embodiments of this application, the SSS may also be generated by using a pseudo random sequence, for example, generated by using any one of an m-sequence, a gold sequence, or a ZC sequence.

In embodiments of this application, the SSB signal may include a plurality of ODFM symbols. For example, two OFDM symbols may be included, or three ODFM symbols may be included, or four OFDM symbols may be included. One OFDM symbol may carry one or more signals in the SSB signal. Signals carried on different OFDM symbols may be the same or different. For details, refer to the following descriptions of embodiments. Details are not described herein.

Step 1902: The signal transmit end sends the SSB signal in a manner of real-imaginary separation of a modulation signal. Correspondingly, a signal receive end receives the SSB signal.

The manner of the real-imaginary separation of the modulation signal may indicate that a real part of the signal is separated from an imaginary part of the signal. For details, refer to the foregoing descriptions. Details are not described again.

With reference to the related descriptions of the real-imaginary separation in the foregoing technical terms, that the signal transmit end sends the SSB signal in the manner of the real-imaginary separation of the modulation signal includes: transmitting the SSB signal in an OQAM waveform, sending the SSB signal in the OQAM waveform and an OFDM waveform, sending the SSB signal in the OQAM waveform and a DFT-s-OFDM waveform, and sending the SSB signal in the OQAM waveform, the DFT-s-OFDM waveform, and the OFDM waveform. The following describes the four manners by using examples.
1. The SSB signal is transmitted in the OQAM waveform.
   That the SSB signal is transmitted in the OQAM waveform may indicate that each signal in the SSB signal is transmitted in the OQAM waveform.
2. The SSB signal is sent in the OQAM waveform and the OFDM waveform.

That the SSB signal is sent in the OQAM waveform and the OFDM waveform may indicate that a part of signals in the SSB signal are sent in the OQAM waveform, and another signal in the SSB signal is sent in the OFDM waveform.

For example, the SSB signal includes the DMRS and another signal (for example, at least one of the SSS, the PSS, and the PBCH). The signal transmit end may send the DMRS in the OFDM waveform, and send the another signal in the OQAM waveform.

For another example, the SSB signal includes the SSS and another signal (for example, at least one of the DMRS, the PSS, and the PBCH). The signal transmit end may send, in the OFDM waveform, the SSS in the SSB signal, and send, in the OQAM waveform, the another signal in the SSB signal.

3. The SSB signal is sent in the OQAM waveform and the DFT-s-OFDM waveform.

That the SSB signal is sent in the OQAM waveform and the DFT-s-OFDM waveform may indicate that a part of signals in the SSB signal are sent in the OQAM waveform, and another signals in the SSB signal is sent in the DFT-s-OFDM waveform.

For example, the SSB signal includes the PSS and another signal (for example, at least one of the DMRS, the SSS, and the PBCH). The signal transmit end may send, in the DFT-s-OFDM waveform, the PSS in the SSB signal, and send, in the OQAM waveform, the another signal in the SSB signal.

4. The SSB signal is sent in the OQAM waveform, the DFT-s-OFDM waveform, and the OFDM waveform.

That the SSB signal is sent in the OQAM waveform, the DFT-s-OFDM waveform, and the OFDM waveform may indicate that a part of signals of the SSB signal are separately sent in the OQAM waveform, the DFT-s-OFDM waveform, and the OFDM waveform.

For example, the SSB signal includes the PSS, the DMRS, and another signal (for example, the SSS and/or the PBCH). The signal transmit end may send, in the OQAM waveform, the PSS in the SSB signal, send, in the DFT-s-OFDM waveform, the DMRS in the SSB signal, and send, in the OFDM waveform, the another signal in the SSB signal.

It should be noted that the foregoing four manners are merely examples, and are not intended to limit the manner of the real-imaginary separation of the modulation signal in embodiments of this application.

Further, in embodiments of this application, after receiving the SSB signal, the signal receive end may parse the received SSB signal to obtain information carried in the SSB signal.

Based on the technical solution in FIG. 19, after obtaining the SSB signal, the signal transmit end may send the SSB signal in the manner of the real-imaginary separation of the modulation signal. A PAPR of a signal can be reduced due to the manner of the real-imaginary separation of the modulation signal. Therefore, based on the technical solution provided in embodiments of this application, a PAPR of the SSB signal can be reduced, and transmission efficiency can be improved.

In some embodiments, with reference to S1902, all signals in the SSB signal are transmitted in the OQAM waveform. The SSB signal may include a plurality of OFDM symbols. For example, the SSB signal may include two OFDM symbols, or include three OFDM symbols, or include four OFDM symbols. Certainly, more OFDM symbols may be alternatively included. Different quantities of OFDM symbols included in the SSB signal indicate different signals carried on the OFDM symbols in the SSB signal. Specifically, the following scenario 1 to scenario 3 may be included.

Scenario 1: The SSB signal includes two OFDM symbols.

One OFDM symbol may include/carry one or more types of signals. Specifically, the following 1-1 to 1-4 may be included.

1-1: The SSB signal includes two types of signals, and one type of signal occupies one OFDM symbol.

For example, the SSB signal includes the PSS and the PBCH. The PSS and the PBCH each occupy one OFDM symbol. For another example, the SSB includes the SSS and the PBCH. The SS and the PBCH each occupy one OFDM symbol.

1-2: The SSB signal includes three types of signals: the PSS, the PBCH, and the DMRS.

In an example, one OFDM symbol includes two types of signals, and the other OFDM symbol includes one type of signal. For example, a 1^{st} OFDM symbol in the SSB signal includes the PSS, and a 2^{nd} OFDM symbol includes the PBCH and the DMRS. For another example, a 1^{st} OFDM symbol in the SSB signal includes the PSS and the DMRS, and a 2^{nd} OFDM symbol includes the PBCH.

In another example, each OFDM symbol includes two types of signals. For example, a 1^{st} OFDM symbol in the SSB signal includes the PSS and the DMRS, and a 2^{nd} OFDM symbol includes the PBCH and the DMRS.

1-3: The SSB signal includes three types of signals: the PSS, the PBCH, and the SSS.

In an example, one OFDM symbol includes two types of signals, and the other OFDM symbol includes one type of signal. For example, a 1^{st} OFDM symbol in the SSB signal includes the PSS, and a 2^{nd} OFDM symbol includes the PBCH and the SSS. For another example, a 1^{st} OFDM symbol in the SSB signal includes the PSS and the SSS, and a 2^{nd} OFDM symbol includes the PBCH.

In another example, each OFDM symbol includes two types of signals. For example, a 1^{st} OFDM symbol in the SSB signal includes the PSS and the PBCH, and a 2^{nd} OFDM symbol includes the PBCH and the SSS.

1-4: The SSB signal includes four types of signals: the PSS, the SSS, the PBCH, and the DMRS.

In an example, one OFDM symbol includes three types of signals, and the other OFDM symbol includes one type of signal. Alternatively, the OFDM symbols separately include two types of signals. Alternatively, one OFDM symbol includes three types of signals, and the other OFDM symbol includes two types of signals.

For example, a 1^{st} OFDM symbol in the SSB signal includes the PSS and the SSS, and a 2^{nd} OFDM symbol includes the PBCH and the DMRS.

For another example, a 1^{st} OFDM symbol in the SSB signal includes the PSS and the DMRS, and a 2^{nd} OFDM symbol includes the PBCH and the SSS.

For another example, a 1^{st} OFDM symbol in the SSB signal includes the PSS, the DMRS, and the SSS, and a 2^{nd} OFDM symbol includes the PBCH and the DMRS.

Scenario 2: The SSB signal includes three OFDM symbols.

One OFDM symbol may include/carry one or more types of signals. Specifically, the following 2-1 to 2-3 may be included.

2-1: Signals included on the three OFDM symbols in the SSB signal are the PSS, a DMRS of the PBCH, and the PBCH.

Quantities of signals on the OFDM symbols may be any one of [1, 1, 1], [1, 2, 1], [1, 1, 2], [1, 3, 2], [1, 2, 3], [2, 1, 1], [2, 2, 1], [1, 2, 2], [2, 1, 2], [2, 2, 2], [3, 2, 2], [2, 3, 2], and [2, 2, 3].

For example, a 1^{st} OFDM symbol includes the PSS, a 2^{nd} OFDM symbol includes the DMRS, and a 3^{rd} OFDM symbol includes the PBCH.

In embodiments of this application, a sequence of signals on the three OFDM symbols is not fixed. For example, a 1^{st} OFDM symbol includes the DMRS, a 2^{nd} OFDM symbol includes the PBCH, and a 3^{rd} OFDM symbol includes the PSS.

Each OFDM symbol may carry a plurality of signals. For example, the OFDM symbol including the DMRS may further include the PBCH.

2-2: Signals included on the three OFDM symbols in the SSB signal are the PSS, the SSS, and the PBCH.

Quantities of signals on the OFDM symbols may be any one of [1, 1, 1], [1, 2, 1], [1, 1, 2], [1, 3, 2], [1, 2, 3], [2, 1, 1], [2, 2, 1], [1, 2, 2], [2, 1, 2], [2, 2, 2], [3, 2, 2], [2, 3, 2], and [2, 2, 3].

For example, a 1^{st} OFDM symbol includes the PSS, a 2^{nd} OFDM symbol includes the SSS, and a 3^{rd} OFDM symbol includes the PBCH.

For another example, a 1^{st} OFDM symbol includes the SSS, a 2^{nd} OFDM symbol includes the PSS, and a 3^{rd} OFDM symbol includes the PBCH.

For another example, a 1^{st} OFDM symbol includes the PSS, a 2^{nd} OFDM symbol includes the PBCH, and a 3^{rd} OFDM symbol includes the SSS.

Each OFDM symbol may carry a plurality of signals. For example, the OFDM symbol including the SSS may further include the PBCH signal.

2-3: Signals included on the three OFDM symbols in the SSB signal are the PSS, the SSS, the PBCH, and the DMRS.

Quantities of signals on the symbols may be any one of [1, 2, 1], [1, 1, 2], [1, 3, 2], [1, 2, 3], [2, 1, 1], [2, 2, 1], [1, 2, 2], [2, 1, 2], [2, 2, 2], [3, 2, 2], [2, 3, 2], and [2, 2, 3].

For another example, in the three OFDM symbols in the SSB signal, one OFDM symbol may include the PSS, another OFDM symbol may include the SSS and the DMRS, and the remaining OFDM symbol may include the PBCH.

For another example, in the three OFDM symbols in the SSB signal, one OFDM symbol may include the PSS, another OFDM symbol may include the SSS, and the remaining OFDM symbol may include the PBCH and the DMRS.

For another example, in the three OFDM symbols in the SSB signal, one OFDM symbol may include the PSS and the DMRS, another OFDM symbol may include the SSS, and the remaining OFDM symbol may include the PBCH.

For another example, in the SSB signal, a 1^{st} OFDM symbol may include the SSS and the DMRS, a 2^{nd} OFDM symbol may include the PSS, and a 3^{rd} OFDM symbol may include the PBCH.

For another example, in the SSB signal, a 1^{st} OFDM symbol may include the PSS, a 2^{nd} OFMD symbol may include the PBCH and the DMRS, and a 3^{rd} OFDM symbol may include the SSS.

For another example, in the SSB signal, a 1^{st} OFDM symbol may include the PSS, a 2^{nd} OFDM symbol may include the PBCH, the DMRS, and the SSS, and a 3^{rd} OFDM symbol may include the PBCH and the DMRS.

For another example, in the SSB signal, a 1^{st} OFDM symbol may include the PSS and the SSS, a 2^{nd} OFDM symbol may include the PBCH and the DMRS, and a 3^{rd} OFDM symbol may include the PBCH and the DMRS.

For another example, in the SSB signal, a 1^{st} OFDM symbol may include the PSS and the DMRS, a 2^{nd} OFDM symbol may include the PBCH, the DMRS, and the SSS, and a 3^{rd} OFDM symbol may include the PBCH and the DMRS.

Scenario 3: The SSB signal includes four OFDM symbols.

In an example, the four OFDM symbols include four types of signals: the PSS, a DMRS of the PBCH, and the PBCH. Quantities of signals on the OFDM symbols may be any one of [1, 1, 1, 1], [1, 2, 1, 1], [2, 1, 1, 1], [1, 1, 2, 1], [1, 1, 1, 2], [1, 1, 2, 2], [1, 2, 2, 2], [2, 1, 2, 2], [2, 2, 1, 2], [2, 2, 2, 1], [2, 1, 1, 1], [2, 2, 2, 2], [3, 2, 2, 2], [2, 3, 2, 2], [2, 2, 2, 3], and [2, 3, 2, 2].

For example, in the SSB signal, a 1^{st} OFDM symbol includes the PSS, a 2^{nd} OFDM symbol includes the DMRS, a 3^{rd} OFDM symbol includes the PBCH, and a 4^{th} OFDM symbol includes the PBCH.

For another example, in the SSB signal, a 1^{st} OFDM symbol includes the DMRS, a 2^{nd} OFDM symbol includes the PBCH, a 3^{rd} OFDM symbol includes the PSS, and a 4^{th} OFDM symbol includes the PBCH.

For another example, in the SSB signal, a 1^{st} OFDM symbol includes the PSS, a 2^{nd} OFDM symbol includes the PBCH and the DMRS, a 3^{rd} OFDM symbol includes the PBCH and the DMRS, and a 4^{th} OFDMD symbol includes the PBCH and the DMRS.

For another example, in the SSB signal, a 1^{st} OFDM symbol includes the PSS, the PBCH, and the DMRS, a 2^{nd} OFDM symbol includes the PBCH and the DMRS, a 3^{rd} OFDM symbol includes the PBCH and the DMRS, and a 4^{th} OFDM symbol includes the PBCH and the DMRS.

For another example, in the SSB signal, a 1^{st} OFDM symbol includes the PSS and the DMRS, a 2^{nd} OFDM symbol includes the PBCH, a 3^{rd} OFDM symbol includes the PBCH, and a 4^{th} OFDM symbol includes the PBCH.

In embodiments of this application, each OFDM symbol may carry a plurality of signals. For example, the OFDM symbol including the DMRS may further include the PBCH.

In another example, three types of signals carried on the OFDM symbols in the SSB signal are the PSS, the SSS, and the PBCH. Quantities of signals on the OFDM symbols may be any one of [1, 1, 1, 1], [1, 2, 1, 1], [2, 1, 1, 1], [1, 1, 2, 1], [1, 1, 1, 2], [1, 1, 2, 2], [1, 2, 2, 2], [2, 1, 2, 2], [2, 2, 1, 2], [2, 2, 2, 1], [2, 1, 1, 1], [2, 2, 2, 2], [3, 1, 1, 1], [1, 3, 1, 1], and [1, 1, 1, 3].

For example, in the SSB signal, a 1^{st} OFDM symbol may include the PSS, a 2^{nd} OFDM symbol may include the SSS, a 3^{rd} OFDM symbol may include the PBCH, and a 4^{th} OFDM symbol may include the PBCH.

For another example, in the SSB signal, a 1^{st} OFDM symbol may include the SSS, a 2^{nd} OFDM symbol may include the PBCH, a 3^{rd} OFDM symbol may include the PSS, and a 4^{th} OFDM symbol may include the PBCH.

For another example, in the SSB signal, a 1^{st} OFDM symbol may include the PSS and the SSS, a 2^{nd} OFDM symbol may include the PBCH, a 3^{rd} OFDM symbol may include the PBCH, and a 4^{th} OFDM symbol may include the PBCH.

For another example, in the SSB signal, a 1^{st} OFDM symbol may include the PSS and the SSS, a 2^{nd} OFDM symbol may include the PBCH, a 3^{rd} OFDM symbol may include the PBCH, and a 4^{th} OFDM symbol may include the PBCH.

In another example, signals carried on the four OFDM symbols included in the SSB signal are the PSS, the SSS, the PBCH, and the DMRS. Quantities of signals on the symbols may be any one of [1, 1, 1, 1], [1, 2, 1, 1], [2, 1, 1, 1], [1, 1, 2, 1], [1, 1, 1, 2], [1, 1, 2, 2], [1, 2, 2, 2], [2, 1, 2, 2], [2, 2, 1, 2], [2, 2, 2, 1], [2, 1, 1, 1], [2, 2, 2, 2], [3, 2, 2, 2], [2, 3, 2, 2], [2, 2, 2, 3], [2, 3, 2, 2], [3, 3, 2, 2], [3, 2, 3, 2], and [3, 2, 2, 3].

For example, in the SSB signal, one OFDM symbol may include the PSS, one OFDM symbol may include the SSS, one OFDM symbol may include the DMRS, and one OFDM symbol may include the PBCH.

For another example, in the SSB signal, one OFDM symbol may include the PSS and the SSS, one OFDM symbol may include the DMRS, one OFDM symbol may include the PBCH, and one OFDM symbol may include the PBCH.

For another example, in the SSB signal, one OFDM symbol may include the PSS and the DMRS, one OFDM symbol may include the SSS, and one ODFM symbol may include the PBCH.

For another example, in the SSB signal, one OFDM symbol may include the PSS, one OFDM symbol may include the SSS and the DMRS, one OFDM symbol may include the PBCH, and one OFDM symbol may include the PBCH.

For another example, in the SSB signal, one OFDM symbol may include the PSS or the SSS, one ODFM symbol may include the PBCH and the DMRS, one OFDM symbol may include the PBCH and the DMRS, and one OFDM symbol may include the PBCH and the DMRS.

For another example, in the SSB signal, one ODFM symbol may include the PSS or the SSS, one ODFM symbol may include the PBCH and the DMRS, one ODFM symbol may include the PBCH and the DMRS, and one ODFM symbol may include the PBCH and the DMRS.

For another example, in the SSB signal, one ODFM symbol may include the PSS/SSS, one ODFM symbol may include the DMRS, one ODFM symbol may include the PBCH, and one ODFM symbol may include the PBCH.

For another example, in the SSB signal, one ODFM symbol may include the PSS, one ODFM symbol may include the SSS, one ODFM symbol may include the PBCH and the DMRS, and one ODFM symbol may include the PBCH and the DMRS.

For another example, in the SSB signal, one ODFM symbol may include the PSS, one ODFM symbol may include the SSS, the PBCH, and the DMRS, one ODFM symbol may include the PBCH and the DMRS, and one ODFM symbol may include the PBCH and the DMRS.

In a possible design, in the SSB signal, a 1^{st} ODFM symbol may include the SSS and the DMRS of the PBCH, a 2^{nd} ODFM symbol may include the PSS, and a 3^{rd} ODFM symbol may include the PBCH.

In another possible design, in the SSB signal, a 1^{st} ODFM symbol may include the PSS, a 2^{nd} ODFM symbol may include the PBCH and the DMRS, and a 3^{rd} ODFM symbol may include the SSS.

In another possible design, in the SSB signal, a 1^{st} ODFM symbol may include the PSS, a 2^{nd} ODFM symbol may include the PBCH, the DMRS, and the SSS, and a 3^{rd} ODFM symbol may include the PBCH and the DMRS.

In another possible design, in the SSB signal, a 1^{st} ODFM symbol may include the PSS and the SSS, a 2^{nd} ODFM symbol may include the PBCH and the DMRS, and a 3^{rd} ODFM symbol may include the PBCH and the DMRS.

In another possible design, in the SSB signal, a 1^{st} ODFM symbol may include the DMRS, a 2^{nd} ODFM symbol may include the PBCH, the DMRS, and the SSS, and a 3^{rd} OFDM symbol may include the PBCH and the DMRS.

It may be understood that all signals in embodiments of this application are signals before real-imaginary separation. When one OFDM symbol includes/has a plurality of OAQM SSB signals, a redundant signal or a zero signal may be inserted between the signals, and operations such as real-imaginary separation are performed on an SSB signal obtained through insertion. FIG. 20 is a diagram of an SSB signal according to an embodiment of this application. In FIG. 20, the SSB signal includes a PSS, an SSS, a DMRS, and a PBCH.

A redundant signal and a zero signal may be a guard interval (guard interval, GI). For example, as shown in FIG. 21, when one OFDM symbol includes a PSS and another signal (for example, an SSS), a GI may be inserted between the PSS and the another signal. For another example, when the PSS and the SSS are in one OFDM symbol, a GI may be inserted between the PSS and the SSS.

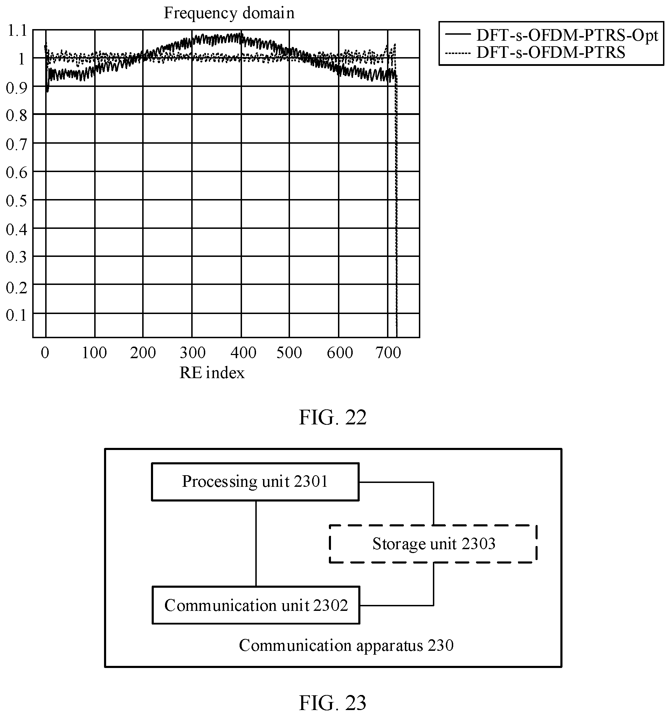

Further, to verify effect of the technical solution of this embodiment, a spectrum diagram shown in FIG. 22 may be obtained based on the technical solution of embodiments of this application. FIG. 22 shows power spectral density (power spectral density, PSD) of DFT-s-OFDM-PTRS-Opt, a DFT-s-OFDM-phase tracking reference signal (phase-tracking reference signal, PTRS) in different frequency domain (Frequency domain).

It can be learned from FIG. 22 that energy at a spectrum edge of an optimized signal is less than energy at a spectrum edge of a signal before optimization, so that in-band interference of the signal can be reduced, and signal transmission efficiency can be improved.

In another embodiment, with reference to S1902, a signal in the SSB signal is transmitted in an OQAM waveform and another waveform. For example, some signals in the SSB signal are transmitted in the OQAM waveform, and other signals are transmitted in an OFDM waveform.

In embodiments of this application, the SSB may include a plurality of OFDM symbols. For example, the SSB signal may include two OFDM symbols, or include three OFDM symbols, or include four OFDM symbols. Certainly, more OFDM symbols may be alternatively included. Different quantities of OFDM symbols included in the SSB signal indicate different signals carried on the OFDM symbols in the SSB signal. Specifically, the following scenario 4 to scenario 6 may be included.

Scenario 4: The SSB signal includes two OFDM symbols.

A signal on one OFDM symbol may be transmitted in the OQAM waveform. A signal on the other OFDM symbol may be transmitted in a DFT-s-OFDM waveform or the OFDM waveform.

In an example, the SSB signal includes two types of signals, and one type of signal occupies one OFDM symbol. For example, the SSB signal includes a PSS and a PBCH, and the two types of signals each occupy one OFDM symbol. For another example, the SSB signal includes an SSS and a PBCH, and the two types of signals each occupy one OFDM symbol.

In another example, the SSB signal includes three types of signals, one OFDM symbol includes two types of signals, and the other OFDM symbol includes one type of signal.

For example, the three types of signals included in the SSB signal are respectively a PSS, a PBCH, and a DMRS. OFDM symbols occupied by the three types of signals may include the following case 1 to case 3.

Case 1: One symbol includes the PSS, and one symbol includes the PBCH and a DMRS of the PBCH.

Case 2: One symbol includes the PSS and the DMRS, and one symbol includes the PBCH.

Case 3: One symbol includes the PSS and the PBCH, and one symbol includes the DMRS.

In case 3, the symbol including the DMRS may be transmitted in the OFDM waveform with a small PAPR. Because power of a frequency domain signal of the OFDM waveform is constant or the same, this is conducive to channel estimation.

For another example, the three types of signals included in the SSB signal are respectively a PSS, a PBCH, and an SSS, and OFDM symbols occupied by the three types of signals may include the following case 4 to case 7.

Case 4: One OFDM symbol includes two types of signals, and the other OFDM symbol includes one type of signal.

Case 5: A 1^{st} symbol includes the PSS, and a 2^{nd} OFDM symbol includes the PBCH and the SSS.

Case 6: A 1^{st} symbol includes the PSS and the SSS, and a 2^{nd} symbol includes the PBCH.

Case 7: One OFDM symbol includes two types of signals, and the other symbol includes two types of signals.

For example, a 1^{st} symbol includes the PSS and the PBCH, and a 2^{nd} symbol includes the PBCH and the SSS.

In another example, the SSB signal includes three types of signals, and each OFDM symbol includes two types of signals.

For example, a 1^{st} OFDM symbol includes the PSS and the DMRS, and a 2^{nd} OFDM symbol includes the PBCH and the DMRS.

In another example, the SSB signal includes four types of signals: a PSS, an SSS, a PBCH, and a DMRS. One OFDM symbol in the SSB signal may include three types of signals, and the other OFDM symbol may include one type of signal. Alternatively, each OFDM symbol in the SSB signal includes two types of signals. Alternatively, one OFDM symbol in the SSB signal includes three types of signals, and the other OFDM symbol includes two types of signals.

For example, one OFDM symbol includes the PSS and the SSS, and the other OFDM symbol includes the PBCH and the DMRS.

For another example, one OFDM symbol includes the PSS and the DMRS, and the other OFDM symbol includes the PBCH and the SSS.

For another example, one OFDM symbol includes the PSS, the DMRS, and the SSS, and the other OFDM symbol includes the PBCH and the DMRS.

For another example, one OFDM symbol includes the PSS, the PBCH, and the SSS, and the other OFDM symbol includes the DMRS.

The OFDM waveform with the small PAPR may be used for an OFDM symbol on which the DMRS is located. Because power of a frequency domain signal of the OFDM waveform is constant or the same, this is conducive to channel estimation.

Scenario 5: The SSB signal includes three OFDM symbols.

When the SSB signal includes the three OFDM symbols, there may be two or three types of waveforms used for transmitting the SSB signal.

For example, the waveforms used by the three OFDM symbols in the SSB signal may be any one of [OQAM, DFT-s-OFDM, OFDM], [OQAM, OFDM, DFT-s-OFDM], [DFT-s-OFDM, OQAM, OFDM], [DFT-s-OFDM, OFDM, OQAM], [OFDM, OQAM, DFT-s-OFDM], [OFDM, DFT-s-OFDM, OQAM], [OQAM, OQAM, OFDM], [OQAM, OFDM, OQAM], [OFDM, OQAM, OQAM], [OQAM, OQAM, DFT-s-OFDM], [OQAM, DFT-s-OFDM, OQAM], and [DFT-s-OFDM, OQAM, OQAM].

In an example, signals included on the three OFDM symbols in the SSB signal are a PSS, a DMRS, and a PBCH. Quantities of signals on the OFDM symbols may be any one of [1, 1, 1], [1, 2, 1], [1, 1, 2], [1, 3, 2], [1, 2, 3], [2, 1, 1], [2, 2, 1], [1, 2, 2], [2, 1, 2], [2, 2, 2], [3, 2, 2], [2, 3, 2], and [2, 2, 3].

For example, a 1^{st} OFDM symbol is the PSS, a 2^{nd} OFDM symbol is the DMRS, and a 3^{rd} OFDM symbol is the PBCH.

In embodiments of this application, a sequence of signals on the three OFDM symbols is not necessarily fixed. For example, the 1^{st} OFDM symbol is the DMRS, the 2^{nd} ODFM symbol is the PBCH, and the 3^{rd} OFDM symbol is the PSS. Each OFDM symbol may carry a plurality of signals. For example, the OFDM symbol including the DMRS may further include the PBCH.

In another example, signals included on the three OFDM symbols of the SSSB signal are a PSS, an SSS, and a PBCH. Quantities of signals on the OFDM symbols may be any one of [1, 1, 1], [1, 2, 1], [1, 1, 2], [1, 3, 2], [1, 2, 3], [2, 1, 1], [2, 2, 1], [1, 2, 2], [2, 1, 2], [2, 2, 2], [3, 2, 2], [2, 3, 2], and [2, 2, 3].

For example, a 1^{st} OFDM symbol may include the PSS, a 2^{nd} OFDM symbol may include the SSS, and a 3^{rd} OFDM symbol may include the PBCH.

For another example, a 1^{st} OFDM symbol may include the SSS, a 2^{nd} OFDM symbol may include the PSS, and a 3^{rd} OFDM symbol may include the PBCH.

For another example, a 1^{st} OFDM symbol may include the PSS, a 2^{nd} OFDM symbol may include the PBCH, and a 3^{rd} OFDM symbol may include the SSS.

Each OFDM symbol may carry a plurality of signals. For example, the OFDM symbol including the SSS may further include the PBCH.

In another example, signals carried on the three OFDM symbols in the SSB signal may be a PSS, an SSS, a PBCH, and a DMRS. Quantities of signals on the OFDM symbols may be any one of [1, 2, 1], [1, 1, 2], [1, 3, 2], [1, 2, 3], [2, 1, 1], [2, 2, 1], [1, 2, 2], [2, 1, 2], [2, 2, 2], [3, 2, 2], [2, 3, 2], and [2, 2, 3].

For example, one OFDM symbol may include the PSS, one OFDM symbol may include the SSS and the DMRS, and one OFDM symbol may include the PBCH.

For another example, one OFDM symbol may include the PSS, one OFDM symbol may include the SSS, and one OFDM symbol may include the PBCH and the DMRS.

For another example, one OFDM symbol may include the PSS and the DMRS, one OFDM symbol may include the SSS, and one OFDM symbol may include the PBCH.

For another example, a 1^{st} OFDM symbol may include the SSS and the DMRS, a 2^{nd} OFDM symbol may include the PSS, and a 3^{rd} OFDM symbol may include the PBCH.

For another example, a 1^{st} OFDM symbol may include the PSS, a 2^{nd} OFDM symbol may include the PBCH and the DMRS, and a 3^{rd} OFDM symbol may include the SSS.

For another example, a 1^{st} OFDM symbol may include the PSS, a 2^{nd} OFDM symbol may include the PBCH, the DMRS, and the SSS, and a 3^{rd} OFDM symbol may include the PBCH and the DMRS.

For another example, a 1^{st} OFDM symbol may include the PSS and the SSS, a 2^{nd} OFDM symbol may include the PBCH and the DMRS, and a 3^{rd} OFDM symbol may include the PBCH and the DMRS.

For another example, a 1^{st} OFMD symbol may include the PSS and the DMRS, a 2^{nd} OFDM symbol may include the PBCH, the DMRS, and the SSS, and a 3^{rd} OFDM symbol may include the PBCH and the DMRS.

Scenario 6: The SSB signal includes four OFDM symbols.

There may be two or three types of waveforms used for transmitting the SSB signal.

In an example, when two types of waveforms are used for transmitting the SSB signal, one type of waveform of the two types of waveforms may be an OQAM waveform, and the other type of waveform may be a DFT-s-OFDM waveform or an OFDM waveform.

In this case, distribution of waveforms on the four OFDM symbols in the SSB signal is any one of [OQAM, OQAM, DFT-s-OFDM, DFT-s-OFDM], [OQAM, DFT-s-OFDM, OQAM, DFT-s-OFDM], [OQAM, DFT-s-OFDM, DFT-s-OFDM, OQAM], [DFT-s-OFDM, OQAM, OQAM, DFT-s-OFDM], [DFT-s-OFDM, OQAM, DFT-s-OFDM, OQAM], [DFT-s-OFDM, DFT-s-OFDM, OQAM, OQAM], [OQAM, OQAM, DFT-s-OFDM, DFT-s-OFDM], [OQAM, DFT-s-OFDM, OQAM, DFT-s-OFDM], [OQAM, DFT-s-OFDM, DFT-s-OFDM, OQAM], [DFT-s-OFDM, OQAM, OQAM, DFT-s-OFDM], [DFT-s-OFDM, OQAM, DFT-s-OFDM, OQAM], [DFT-s-OFDM, DFT-s-OFDM, OQAM, OQAM], [DFT-s-OFDM, OQAM, OQAM, OQAM], [OQAM, DFT-s-OFDM, OQAM, OQAM], [OQAM, OQAM, DFT-s-OFDM, OQAM], [OQAM, OQAM, OQAM, DFT-s-OFDM], [OFDM, OQAM, OQAM, OQAM], [OQAM, OFDM, OQAM, OQAM], [OQAM, OQAM, OFDM, OQAM], and [OQAM, OQAM, OQAM, OFDM].

In another example, when three types of waveforms are used for transmitting the SSB signal, of the three types of waveforms, one type of waveform may be an OQAM waveform, one type of waveform may be a DFT-s-OFDM waveform, and the other type of waveform may be an OFDM waveform. For example, in the SSB signal, a waveform used by one OFDM symbol is the OQAM waveform, a waveform used by one OFDM symbol is the DFT-s-OFDM waveform, and another OFDM symbol may be in the OFDM waveform or the OQAM waveform.

In this case, distribution of waveforms on the four OFDM symbols in the SSB signal is any one of [OQAM, OQAM, OFDM, DFT-s-OFDM], [OQAM, OQAM, DFT-s-OFDM, OFDM], [OQAM, OFDM, DFT-s-OFDM, OQAM], [OQAM, OFDM, OQAM, DFT-s-OFDM], [OQAM, DFT-s-OFDM, OQAM, OFDM], [OQAM, DFT-s-OFDM, OFDM, OQAM], [DFT-s-OFDM, OQAM, OFDM, DFT-s-OFDM], [DFT-s-OFDM, OQAM, DFT-s-OFDM, OFDM], [DFT-s-OFDM, OFDM, DFT-s-OFDM, OQAM], [DFT-s-OFDM, OFDM, OQAM, DFT-s-OFDM], [DFT-s-OFDM, DFT-s-OFDM, OQAM, OFDM], [DFT-s-OFDM, DFT-s-OFDM, OFDM, OQAM], [DFT-s-OFDM, OQAM, OFDM, OQAM], [DFT-s-OFDM, OQAM, OQAM, OFDM], [DFT-s-OFDM, OFDM, OQAM, OQAM], [OFDM, OQAM, DFT-s-OFDM, OQAM], [OFDM, OQAM, OQAM, DFT-s-OFDM], [OFDM, DFT-s-OFDM, OQAM, OQAM], [OQAM, DFT-s-OFDM, OFDM, DFT-s-OFDM], [OQAM, DFT-s-OFDM, DFT-s-OFDM, OFDM], [OQAM, OFDM, DFT-s-OFDM, DFT-s-OFDM], [OFDM, DFT-s-OFDM, OQAM, DFT-s-OFDM], [OFDM, DFT-s-OFDM, DFT-s-OFDM, OQAM], and [OFDM, OQAM, DFT-s-OFDM, DFT-s-OFDM].

In another example, signals included on the four OFDM symbols in the SSB signal are a PSS, a DMRS, and a PBCH. Quantities of signals on the OFDM symbols may be any one of [1, 1, 1, 1], [1, 2, 1, 1], [2, 1, 1, 1], [1, 1, 2, 1], [1, 1, 1, 2], [1, 1, 2, 2], [1, 2, 2, 2], [2, 1, 2, 2], [2, 2, 1, 2], [2, 2, 2, 1], [2, 1, 1, 1], [2, 2, 2, 2], [3, 2, 2, 2], [2, 3, 2, 2], [2, 2, 2, 3], and [2, 3, 2, 2].

For example, a 1^{st} OFDM symbol includes the PSS, a 2^{nd} OFDM symbol includes the DMRS, a 3^{rd} OFDM symbol includes the PBCH, and a 4^{th} OFDM symbol includes the PBCH.

For another example, a 1^{st} OFDM symbol includes the DMRS, a 2^{nd} OFDM symbol includes the PBCH, a 3^{rd} OFDM symbol includes the PSS, and a 4^{th} OFMD symbol includes the PBCH.

For another example, a 1^{st} OFDM symbol includes the PSS, a 2^{nd} OFDM symbol includes the PBCH and the DMRS, a 3^{rd} OFDM symbol includes the PBCH and the DMRS, and a 4^{th} OFDM symbol includes the PBCH and the DMRS.

For another example, a 1^{st} OFDM symbol includes the PSS, the PBCH, and the DMRS, a 2^{nd} OFDM symbol includes the PBCH and the DMRS, a 3^{rd} OFMD symbol includes the PBCH and the DMRS, and a 4^{th} OFMD symbol includes the PBCH and the DMRS.

For another example, a 1^{st} OFDM symbol includes the PSS and the DMRS, a 2^{nd} OFDM symbol includes the PBCH, a 3^{rd} OFDM symbol includes the PBCH, and a 4^{th} OFDM symbol includes the PBCH.

Each OFDM symbol may carry a plurality of signals. For example, the OFDM symbol including the DMRS may further include the PBCH.

In another example, signals carried on OFDM symbols in the SSB may be a PSS, an SSS, and a PBCH. Quantities of signals on the OFDM symbols may be any one of [1, 1, 1, 1], [1, 2, 1, 1], [2, 1, 1, 1], [1, 1, 2, 1], [1, 1, 1, 2], [1, 1, 2, 2], [1, 2, 2, 2], [2, 1, 2, 2], [2, 2, 1, 2], [2, 2, 2, 1], [2, 1, 1, 1], [2, 2, 2, 2], [3, 1, 1, 1], [1, 3, 1, 1], and [1, 1, 1, 3].

For example, a 1^{st} OFDM symbol includes the PSS, a 2^{nd} OFDM symbol includes the SSS, a 3^{rd} OFDM symbol includes the PBCH, and a 4^{th} OFDM symbol includes the PBCH.

For another example, a 1^{st} OFDM symbol includes the SSS, a 2^{nd} OFDM symbol includes the PBCH, a 3^{rd} OFDM symbol includes the PSS, and a 4^{th} OFDM symbol includes the PBCH.

For another example, a 1^{st} OFDM symbol includes the PSS and the SSS, a 2^{nd} OFDM symbol includes the PBCH, a 3^{rd} OFDM symbol includes the PBCH, and a 4^{th} OFDM symbol includes the PBCH.

For another example, a 1^{st} OFDM symbol includes the PSS and the SSS, a 2^{nd} OFDM symbol includes the PBCH, a 3^{rd} OFDM symbol includes the PBCH, and a 4^{th} OFDM symbol includes the PBCH.

In another example, signals carried in the SSB signal may be a PSS, an SSS, a PBCH, and a DMRS. Quantities of signals on the OFDM symbols may be any one of [1, 1, 1, 1], [1, 2, 1, 1], [2, 1, 1, 1], [1, 1, 2, 1], [1, 1, 1, 2], [1, 1, 2, 2], [1, 2, 2, 2], [2, 1, 2, 2], [2, 2, 1, 2], [2, 2, 2, 1], [2, 1, 1, 1], [2, 2, 2, 2], [3, 2, 2, 2], [2, 3, 2, 2], [2, 2, 2, 3], [2, 3, 2, 2], [3, 3, 2, 2], [3, 2, 3, 2], and [3, 2, 2, 3].

For example, in the SSB signal, one OFDM symbol may include the PSS, one OFDM symbol may include the SSS, one OFDM symbol may include the DMRS, and one OFDM symbol may include the PBCH.

For another example, in the SSB signal, one OFDM symbol may include the PSS and the SSS, one OFDM symbol may include the DMRS, one OFDM symbol may include the PBCH, and one OFDM symbol may include the PBCH.

For another example, in the SSB signal, one OFDM symbol may include the PSS and the DMRS, one OFDM symbol may include the SSS, and one OFDM symbol may include the PBCH.

For another example, in the SSB signal, one OFDM symbol may include the PSS, one OFDM symbol may include the SSS and the DMRS, one OFDM symbol may include the PBCH, and one OFDM symbol may include the PBCH.

For another example, in the SSB signal, one OFDM symbol may include the PSS/SSS, one OFDM symbol may include the PBCH and the DMRS, one OFDM symbol may include the PBCH and the DMRS, and one OFDM symbol may include the PBCH and the DMRS.

For another example, in the SSB signal, one OFDM symbol may include the PSS/SSS, one OFDM symbol may include the PBCH and the DMRS, one OFDM symbol may include the PBCH and the DMRS, and one OFDM symbol may include the PBCH and the DMRS.

For another example, in the SSB signal, one OFDM symbol may include the PSS/SSS, one OFDM symbol may include the DMRS, one OFDM symbol may include the PBCH, and one OFDM symbol may include the PBCH.

For another example, in the SSB signal, one OFDM symbol may include the PSS, one OFDM symbol may include the SSS, one OFDM symbol may include the PBCH and the DMRS, and one OFDM symbol may include the PBCH and the DMRS.

For another example, in the SSB signal, one OFDM symbol may include the PSS, one OFDM symbol may include the SSS, the PBCH, and the DMRS, one OFDM symbol may include the PBCH and the DMRS, and one OFDM symbol may include the PBCH and the DMRS.

For another example, in the SSB signal, one OFDM symbol may include the SSS and the DMRS, a 2^{nd} OFDM symbol may include the PSS, and a 3^{rd} OFDM symbol may include the PBCH.

For another example, in the SSB signal, a 1^{st} OFDM symbol may include the PSS, a 2^{nd} OFDM symbol may include the PBCH and the DMRS, and a 3^{rd} OFDM symbol may include the SSS.

For another example, in the SSB signal, a 1^{st} OFDM symbol may include the PSS, a 2^{nd} OFDM symbol may include the PBCH, the DMRS, and the SSS, and a 3^{rd} OFDM symbol may include the PBCH and the DMRS.

For another example, in the SSB signal, a 1^{st} OFDM symbol may include the PSS and the SSS, a 2^{nd} OFDM symbol may include the PBCH and the DMRS, and a 3^{rd} OFDM symbol may include the PBCH and the DMRS.

For another example, in the SSB signal, a 1^{st} OFDM symbol may include the PSS and the DMRS, a 2^{nd} OFDM symbol may include the PBCH, the DMRS, and the SSS, and a 3^{rd} OFDM symbol may include the PBCH and the DMRS.

Based on embodiments, the signal transmit end may transmit the SSB signal in the OQAM waveform and another waveform, so that estimation performance of the SSB signal can be improved while a PAPR of the SSB signal is reduced.

The solutions in the foregoing embodiments of this application may be combined without a conflict.

In the foregoing embodiments provided in this application, the methods provided in embodiments of this application are separately described from a perspective of interaction between the primary device and the secondary device. It may be understood that to implement functions in the methods provided in the foregoing embodiments of this application, network elements such as the primary device and the secondary device include corresponding hardware structures and/or software modules for performing the functions. A person skilled in the art should easily be aware that, in combination with algorithm steps of the examples described in embodiments disclosed in this specification, this application can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, functional modules of the primary device and the secondary device may be obtained through division according to the foregoing method examples. For example, the functional modules may be obtained through division based on corresponding functions, or two or more functions may be integrated into a processing module. The integrated module may be implemented in a form of hardware, or may be implemented in a form of a software functional module. It should be noted that, in embodiments of this application, division into modules is an example, and is merely logical function division. In an actual implementation, another division manner may be used.

When an integrated unit is used, FIG. 23 is a possible diagram of a structure of a communication apparatus (denoted as a communication apparatus 230) in the foregoing embodiments. The communication apparatus 230 includes a communication unit 2302 and a processing unit 2301, and may further include a storage unit 2303. The diagram of the structure shown in FIG. 23 may be used to show a structure of the primary device in the foregoing embodiments.

When the diagram of the structure shown in FIG. 23 is used to show a structure of the signal transmit end in the foregoing embodiments, the processing unit 2301 is configured to control and manage an action of the signal transmit end. For example, the processing unit 2301 performs, through the communication unit 2302, step 1901 and step 1902 in FIG. 19, and/or an action performed by the primary device in another process described in embodiments of this application. The processing unit 2301 may communicate with another network entity through the communication unit 2302, for example, communicate with the signal receive end. The storage unit 2303 is configured to store program code and data of the primary device.

When the diagram of the structure shown in FIG. 23 is used to show the structure of the signal transmit end in the foregoing embodiments, the communication apparatus 230 may be the signal transmit end, or may be a chip in the signal transmit end.

When the communication apparatus 230 is the signal transmit end, the processing unit 2301 may be a processor or a controller, and the communication unit 2302 may be a communication interface, a transceiver, a transceiver machine, a transceiver circuit, a transceiver apparatus, or the like. The communication interface is a general term, and may include one or more interfaces. The storage unit 2303 may be a memory. When the communication apparatus 230 is the chip in the signal transmit end, the processing unit 2301 may be a processor or a controller, and the communication unit 2302 may be an input interface and/or an output interface, a pin, a circuit, or the like. The storage unit 2303 may be a storage unit (for example, a register or a cache) in the chip, or may be a storage unit (for example, a read-only memory (read-only memory, ROM for short) or a random access memory (random access memory, RAM for short)) that is in a terminal device and that is located outside the chip.

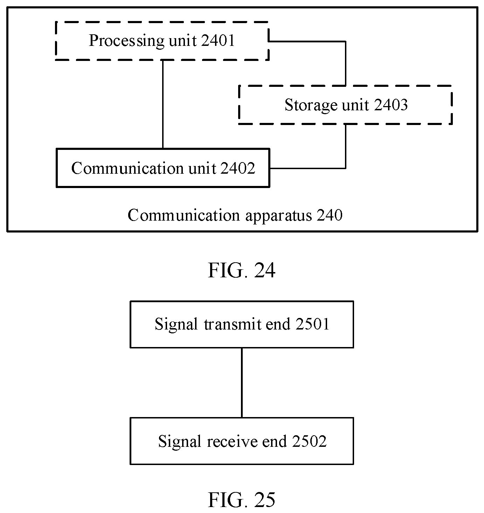

When an integrated unit is used, FIG. 24 is a possible diagram of a structure of a communication apparatus (denoted as a communication apparatus 240) in the foregoing embodiments. The communication apparatus 240 includes a communication unit 2402, and may further include a processing unit 2401 and a storage unit 2403. The diagram of the structure shown in FIG. 24 may be used to show a structure of the signal receive end in the foregoing embodiments.

When the diagram of the structure shown in FIG. 24 is used to show a structure of the signal receive end in the foregoing embodiments, the processing unit 2401 is configured to control and manage an action of the signal receive end through the communication unit 2402. For example, the processing unit 2401 is configured to receive an SSB signal through the communication unit 2402, and/or an action performed by the signal transmit end in another process described in the embodiments of this application. The processing unit 2401 may communicate with another entity through the communication unit 2402, for example, communicate with the signal transmit end. The storage unit 2403 is configured to store program code and data of the signal transmit end.

When the diagram of the structure shown in FIG. 24 is used to show the structure of the signal transmit end in the foregoing embodiments, the communication apparatus 240 may be the signal transmit end, or may be a chip in the signal transmit end.

When the communication apparatus 240 is a secondary device, the processing unit 2401 may be a processor or a controller, and the communication unit 2402 may be a communication interface, a transceiver, a transceiver machine, a transceiver circuit, a transceiver apparatus, or the like. The communication interface is a general term, and may include one or more interfaces. The storage unit 2403 may be a memory. When the communication apparatus 240 is a chip in a secondary device, the processing unit 2401 may be a processor or a controller, and the communication unit 2402 may be an input interface and/or an output interface, a pin, a circuit, or the like. The storage unit 2403 may be a storage unit (for example, a register or a cache) in the chip, or may be a storage unit (for example, a read-only memory (read-only memory, ROM for short) or a random access memory (random access memory, RAM for short)) that is in the signal transmit end or the signal transmit end and that is located outside the chip.

The communication unit may also be referred to as a transceiver unit. An antenna and a control circuit that have a receiving and sending function in each of the communication apparatus 230 and the communication apparatus 240 may be considered as the communication unit of the communication apparatus, and a processor having a processing function may be considered as the processing unit of the communication apparatus. Optionally, a component that is in the communication unit and that is configured to implement a receiving function may be considered as a receiving unit. The receiving unit is configured to perform a receiving step in embodiments of this application. The receiving unit may be a receiver machine, a receiver, a receiver circuit, or the like. A component that is in the communication unit and that is configured to implement a sending function may be considered as a sending unit. The sending unit is configured to perform a sending step in embodiments of this application. The sending unit may be a transmitter machine, a transmitter, a transmitter circuit, or the like.

When the integrated unit in each of FIG. 23 and FIG. 24 is implemented in a form of a software functional module and sold or used as an independent product, the integrated unit may be stored in a computer-readable storage medium. Based on such an understanding, the technical solutions of embodiments of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) or a processor (processor) to perform all or some of the steps of the methods described in embodiments of this application. The storage medium that stores the computer software product includes any medium that can store program code, such as a USB flash drive, a removable hard disk, a read-only memory, a random access memory, a magnetic disk, or an optical disc.

The units in FIG. 23 and FIG. 24 may alternatively be referred to as modules. For example, the processing unit may be referred to as a processing module.

FIG. 25 is an example diagram of a communication system according to an embodiment of this application. The communication system includes a signal transmit end 2501 and a signal transmit end 2502.

The signal transmit end 2501 is configured to perform an action performed by the signal transmit end in the foregoing embodiments. For example, the signal transmit end 2501 is configured to perform step 1901 and step 1902 in FIG. 19.

The signal transmit end 2502 is configured to perform an action performed by the signal transmit end in the foregoing embodiments. For example, the signal transmit end 2502 is configured to receive an SSB signal.

In an implementation process, the steps in the methods provided in this embodiment may be completed by using an integrated logic circuit of hardware in the processor or an instruction in a form of software. The steps of the methods disclosed with reference to embodiments of this application may be directly performed by a hardware processor, or may be performed by using a combination of hardware in the processor and a software module.

The processor in this application may include but is not limited to at least one of the following types: a central processing unit (central processing unit, CPU), a microprocessor, a digital signal processor (DSP), a microcontroller unit (microcontroller unit, MCU), or a computing device used for running software like an artificial intelligence processor. Each computing device may include one or more cores used to execute software instructions to perform operations or processing. The processor may be an independent semiconductor chip, or may be integrated with another circuit into a semiconductor chip. For example, the processor may form a SoC (system-on-a-chip) with another circuit (for example, a codec circuit, a hardware acceleration circuit, or various buses and interface circuits). Alternatively, the processor may be integrated into an ASIC as a built-in processor of the ASIC. The ASIC integrated with the processor may be separately packaged, or may be packaged with another circuit. In addition to the core configured to execute the software instructions to perform the operations or processing, the processor may further include a necessary hardware accelerator, for example, a field programmable gate array (field programmable gate array, FPGA), a PLD (programmable logic device), or a logic circuit for implementing a dedicated logic operation.

The memory in embodiments of this application may include at least one of the following types: a read-only memory (read-only memory, ROM) or another type of static storage device that can store static information and instructions, a random access memory (random access memory, RAM) or another type of dynamic storage device that can store information and instructions, or an electrically erasable programmable read-only memory (Electrically erasable programmable read-only memory, EEPROM). In some scenarios, the memory may alternatively be a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of an instruction or a data structure and that can be accessed by a computer. This is not limited thereto.

An embodiment of this application further provides a computer-readable storage medium, including instructions. When the instructions are run on a computer, the computer is enabled to perform any one of the foregoing methods.

An embodiment of this application further provides a computer program product including instructions. When the computer program product runs on a computer, the computer is enabled to perform any one of the foregoing methods.

An embodiment of this application further provides a communication system, including the foregoing primary device and secondary device.

An embodiment of this application further provides a chip. The chip includes a processor and an interface circuit. The interface circuit is coupled to the processor. The processor is configured to run a computer program or instructions, to implement the foregoing methods. The interface circuit is configured to communicate with a module other than the chip.

All or some of the foregoing embodiments may be implemented by using software, hardware, firmware, or any combination thereof. When a software program is used to implement embodiments, all or some of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device like a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD for short)), or the like.

Although this application is described with reference to embodiments, in a process of implementing this application that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the accompanying claims, and are considered as any of or all modifications, variations, combinations, or equivalents that cover the scope of this application. It is clearly that a person skilled in the art can make various modifications and variations to this application without departing from the spirit and scope of this application. In this way, this application is intended to cover these modifications and variations of this application provided that they fall within the scope of protection defined by the following claims and their equivalent technologies.

## Claims

1. A communication method, comprising:
obtaining a synchronization signal block SSB signal, wherein the SSB signal comprises at least one of a physical broadcast channel PBCH, a demodulation reference signal DMRS, a primary synchronization signal PSS, and a secondary synchronization signal SSS; and
sending the SSB signal in a manner of real-imaginary separation of a modulation signal, wherein the manner of the real-imaginary separation of the modulation signal indicates that a real part of the signal is separated from an imaginary part of the signal.

2. The method according to claim 1, wherein sending the SSB signal in the manner of the real-imaginary separation of the modulation signal comprises:
sending the SSB signal in an offset quadrature amplitude modulation OQAM waveform.

3. The method according to claim 1, wherein sending the SSB signal in the manner of the real-imaginary separation of the modulation signal comprises:
sending the SSB signal in an OQAM waveform and an orthogonal frequency division multiplexing OFDM waveform.

4. The method according to claim 3, wherein sending the SSB signal in the OQAM waveform and the orthogonal frequency division multiplexing OFDM waveform comprises:
sending the DMRS in the OFDM waveform, and sending, in the OQAM, a signal in the SSB signal other than the DMRS.

5. The method according to claim 3, wherein sending the SSB signal in the OQAM wave and the OFDM wave comprises:
sending the SSS in the OFDM waveform, and sending, in the OQAM waveform, a signal in the SSB signal other than the SSS.

6. The method according to claim 1, wherein sending the SSB signal in the manner of the real-imaginary separation of the modulation signal comprises:
sending the SSB signal in an OQAM waveform and a discrete Fourier transform spread orthogonal frequency division multiplexing DFT-s-OFDM waveform.

7. The method according to claim 6, wherein sending the SSB signal in the OQAM waveform and the DFT-s-OFDM waveform comprises:
sending the PSS in the DFT-s-OFDM waveform, and sending, in the OQAM waveform, a signal in the SSB signal other than the PSS.

8. The method according to claim 1, wherein sending the SSB signal in the manner of the real-imaginary separation of the modulation signal comprises:
sending the SSB signal in an OQAM waveform, a DFT-s-OFDM waveform, and an OFDM waveform.

9. The method according to claim 8, wherein sending the SSB signal in the OQAM waveform, the DFT-s-OFDM waveform, and the OFDM waveform comprises:
sending the PSS in the DFT-s-OFDM waveform, sending the DMRS in the OFDM waveform, and sending, in the OQAM waveform, a signal in the signal other than the PSS and the DMRS.

10. A communication apparatus, wherein the communication apparatus comprises a processor and a communication interface coupled to the processor, wherein
the processor is configured to:
obtain a synchronization signal block SSB signal through the communication interface, wherein the SSB signal comprises at least one of a physical broadcast channel PBCH, a demodulation reference signal DMRS, a primary synchronization signal PSS, and a secondary synchronization signal SSS; and
send the SSB signal through the communication interface in a manner of real-imaginary separation of a modulation signal, wherein the manner of the real-imaginary separation of the modulation signal indicates that a real part of the signal is separated from an imaginary part of the signal.

11. A communication apparatus, wherein the communication apparatus comprises one or more processors and one or more memories, the one or more memories are coupled to the one or more processors, and the one or more memories are configured to store computer program code or computer instructions; and
when the one or more processors execute the computer instructions, the communication apparatus is enabled to perform the method according to any one of claims 1 to 9.

12. A computer-readable storage medium, wherein the computer-readable storage medium stores computer instructions or a program, and when the computer instructions or the program is run on a computer, the computer is enabled to perform the method according to any one of claims 1 to 9.
